# EUROPEAN PATENT APPLICATION

(11) **EP 4 651 085 A1**
(43) Date of publication of application: **19.11.2025**
(21) Application number: 24741497.2
(22) Date of filing: 09.01.2024
(51) Int. Cl.: G06T 9/00

(54) **ENCODING METHOD, DECODING METHOD, ENCODING DEVICE, AND DECODING DEVICE**

(30) Priority: 11.01.2023 US 202363438291 P; 09.05.2023 US 202363465060 P
(71) Applicant: Panasonic Intellectual Property Corporation of America, Torrance, CA 90504 (US)
(72) Inventor: SUGIO, Toshiyasu, Kadoma-shi, Osaka 571-0057 (JP); IGUCHI, Noritaka, Kadoma-shi, Osaka 571-0057 (JP); NISHI, Takahiro, Kadoma-shi, Osaka 571-0057 (JP); LIM, Chong Soon, Singapore 469332 (SG); WU, Zheng, Singapore 469332 (SG); TEO, Han Boon, Singapore 469332 (SG); LOI, Keng Liang, Singapore 469332 (SG); HAN, Chung Dean, Singapore 469332 (SG); DUMANOV, Farman, Singapore 469332 (SG); YADAV, Praveen Kumar, Singapore 469332 (SG)
(74) Representative: Grünecker Patent- und Rechtsanwälte PartG mbB
(86) International application number: PCT/JP2024/000110
(87) International publication number: WO 2024/150724

(57) **Abstract**

An encoding method according to one aspect of the present disclosure includes: transforming displacement vectors into samples in a predetermined YUV format (S301), the displacement vectors representing displacements for correcting three-dimensional points included in a three-dimensional mesh frame; and encoding the samples to a bitstream (S302). The samples include two or more Y samples corresponding to Y, one or more U samples corresponding to U, and one or more V samples corresponding to V. The two or more Y samples are more numerous than the one or more U samples and the one or more V samples.

## Description

### [Technical Field]

The present disclosure relates to, for example, an encoding method.

### [Background Art]

PTL 1 proposes a method and a device for encoding and decoding three-dimensional mesh data.

### [Citation List]

### [Patent Literature]

[PTL 1] Japanese Unexamined Patent Application Publication No. 2006-187015

### [Summary of Invention]

### [Technical Problem]

There are demands for further improvement in processing of encoding three-dimensional data and the like. An object of the present disclosure is to improve processing of encoding three-dimensional data and the like.

### [Solution to Problem]

An encoding method according to one aspect of the present disclosure comprising: transforming displacement vectors into samples in a predetermined YUV format, the displacement vectors representing displacements for correcting three-dimensional points included in a three-dimensional mesh frame; and encoding the samples to a bitstream, wherein the samples include two or more Y samples corresponding to Y, one or more U samples corresponding to U, and one or more V samples corresponding to V, and the two or more Y samples are more numerous than the one or more U samples and the one or more V samples.

### [Advantageous Effects of Invention]

The present disclosure can contribute toward improving processing of encoding three-dimensional data and the like.

### [Brief Description of Drawings]

[FIG. 1]

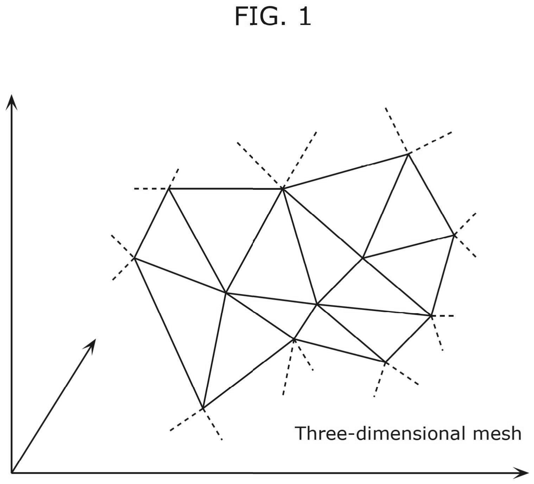

   FIG. 1 is a conceptual diagram illustrating a three-dimensional mesh according to an embodiment.
[FIG. 2]

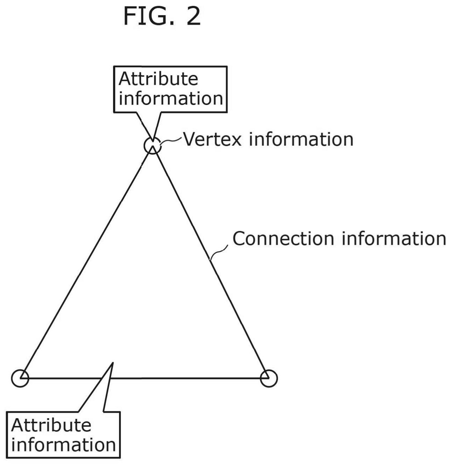

   FIG. 2 is a conceptual diagram illustrating basic elements of the three-dimensional mesh according to the embodiment.
[FIG. 3]

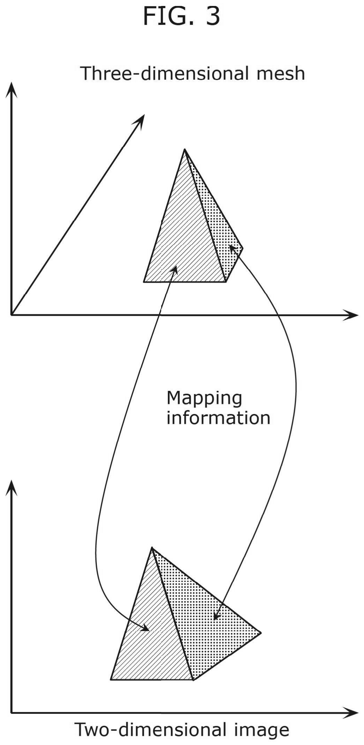

   FIG. 3 is a conceptual diagram illustrating mapping according to the embodiment.
[FIG. 4]

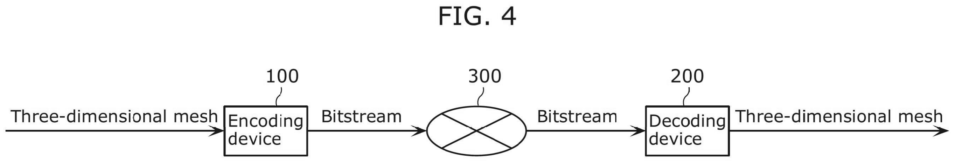

   FIG. 4 is a block diagram illustrating a configuration example of an encoding/decoding system according to the embodiment.
[FIG. 5]

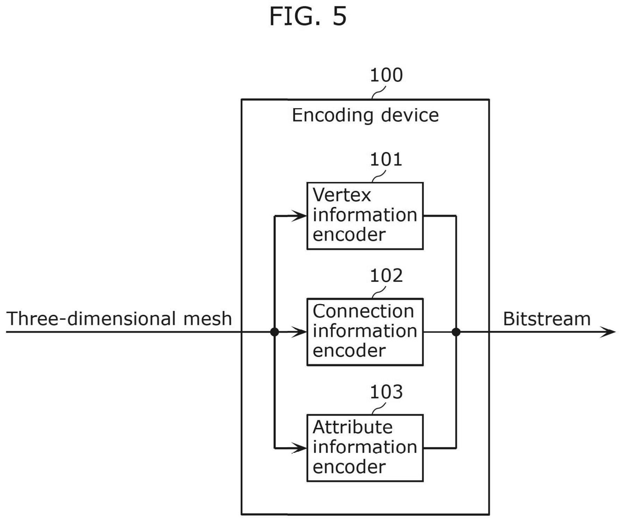

   FIG. 5 is a block diagram illustrating a configuration example of an encoding device according to the embodiment.
[FIG. 6]

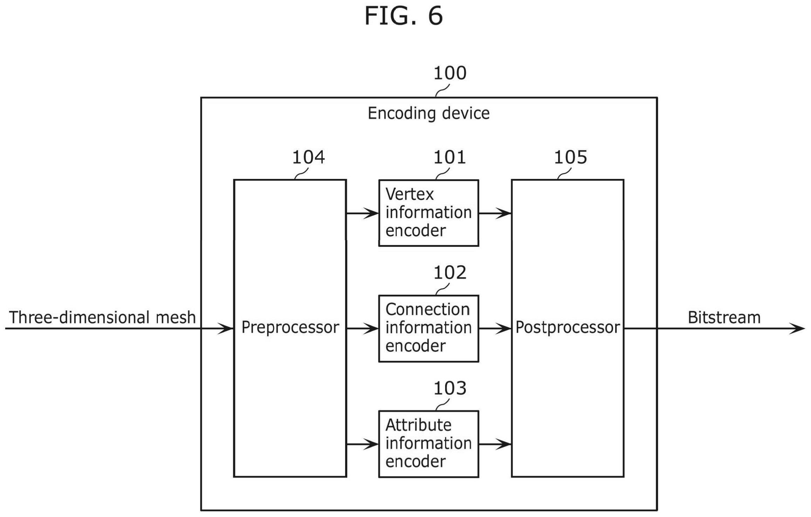

   FIG. 6 is a block diagram illustrating another configuration example of the encoding device according to the embodiment.
[FIG. 7]

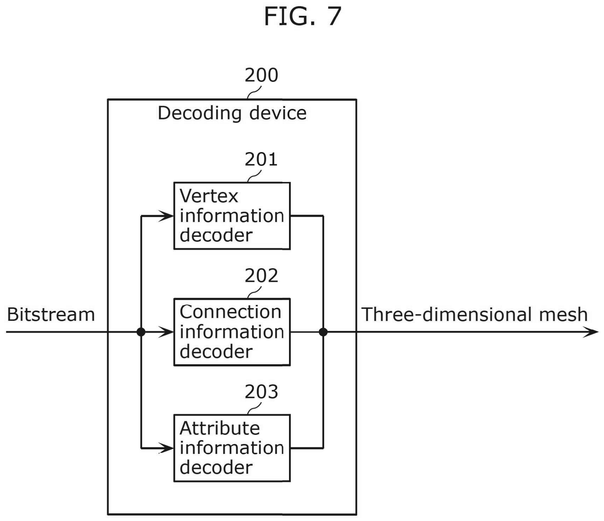

   FIG. 7 is a block diagram illustrating a configuration example of a decoding device according to the embodiment.
[FIG. 8]

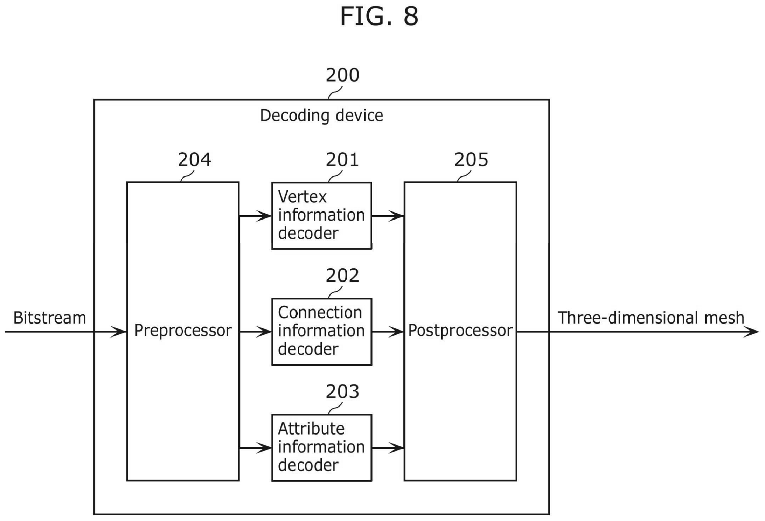

   FIG. 8 is a block diagram illustrating another configuration example of the decoding device according to the embodiment.
[FIG. 9]

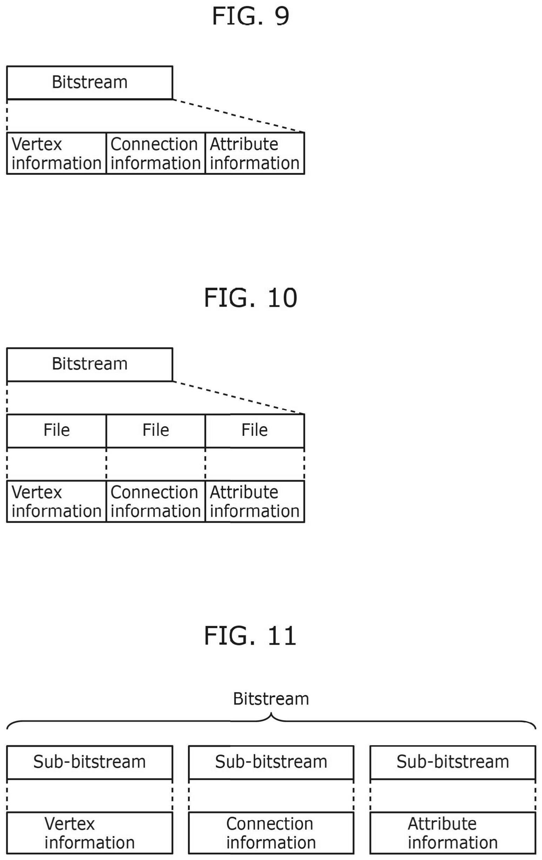

   FIG. 9 is a conceptual diagram illustrating a configuration example of a bitstream according to the embodiment.
[FIG. 10]
   FIG. 10 is a conceptual diagram illustrating another configuration example of the bitstream according to the embodiment.
[FIG. 11]
   FIG. 11 is a conceptual diagram illustrating yet another configuration example of the bitstream according to the embodiment.
[FIG. 12]

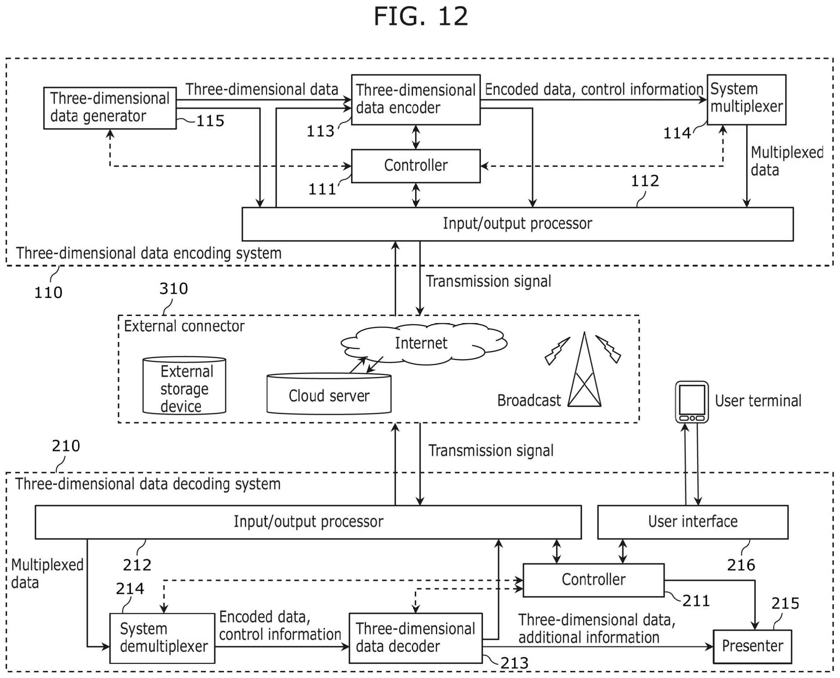

   FIG. 12 is a block diagram illustrating a specific example of the encoding/decoding system according to the embodiment.
[FIG. 13]

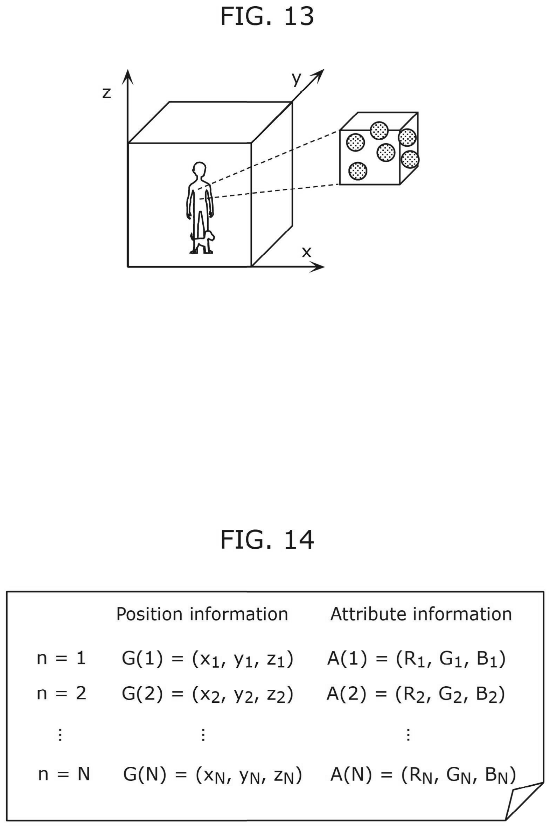

   FIG. 13 is a conceptual diagram illustrating a configuration example of point cloud data according to the embodiment.
[FIG. 14]
   FIG. 14 is a conceptual diagram illustrating a data file example of the point cloud data according to the embodiment.
[FIG. 15]

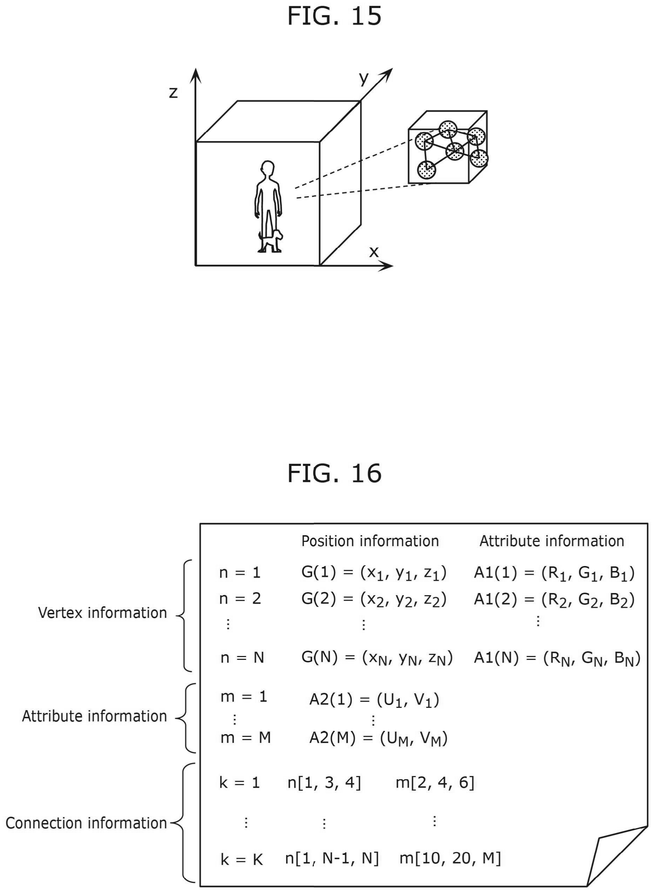

   FIG. 15 is a conceptual diagram illustrating a configuration example of mesh data according to the embodiment.
[FIG. 16]
   FIG. 16 is a conceptual diagram illustrating a data file example of the mesh data according to the embodiment.
[FIG. 17]

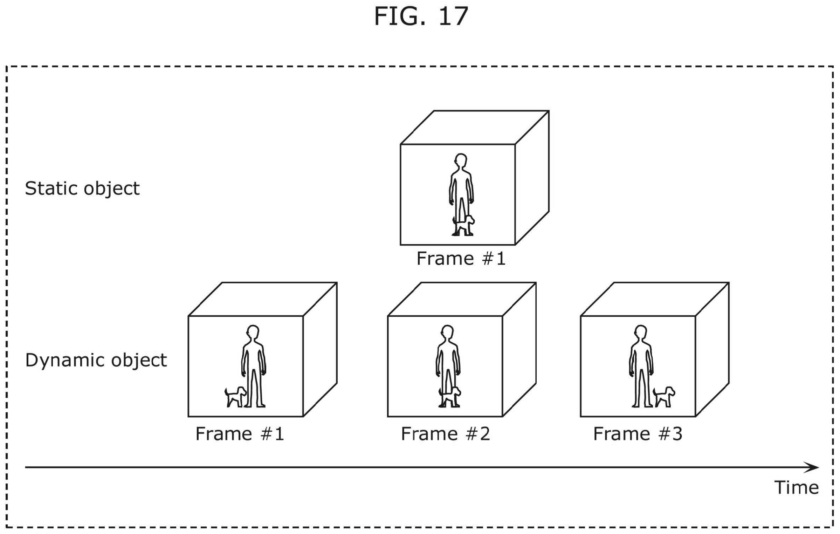

   FIG. 17 is a conceptual diagram illustrating a type of three-dimensional data according to the embodiment.
[FIG. 18]

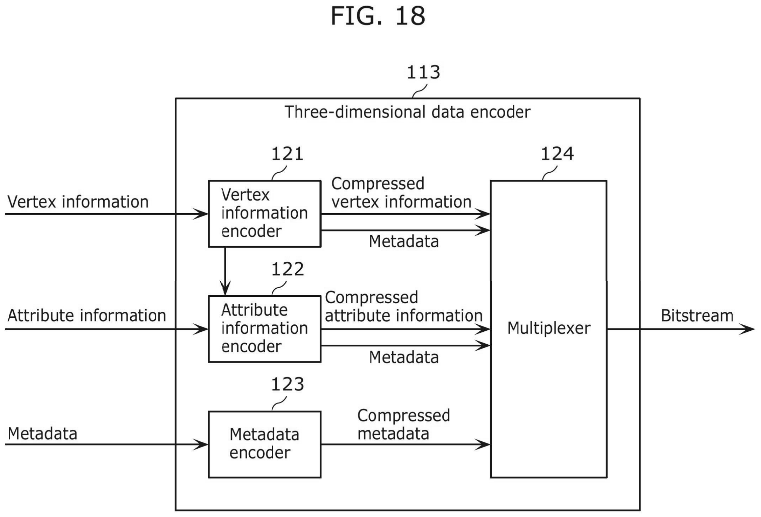

   FIG. 18 is a block diagram illustrating a configuration example of a three-dimensional data encoder according to the embodiment.
[FIG. 19]

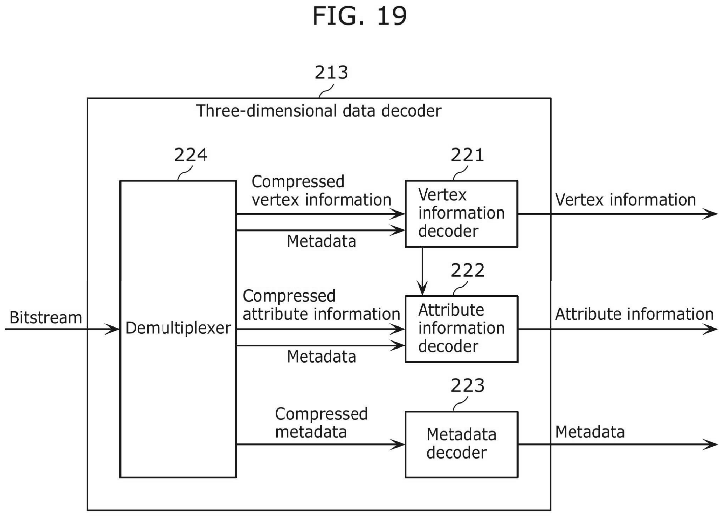

   FIG. 19 is a block diagram illustrating a configuration example of a three-dimensional data decoder according to the embodiment.
[FIG. 20]

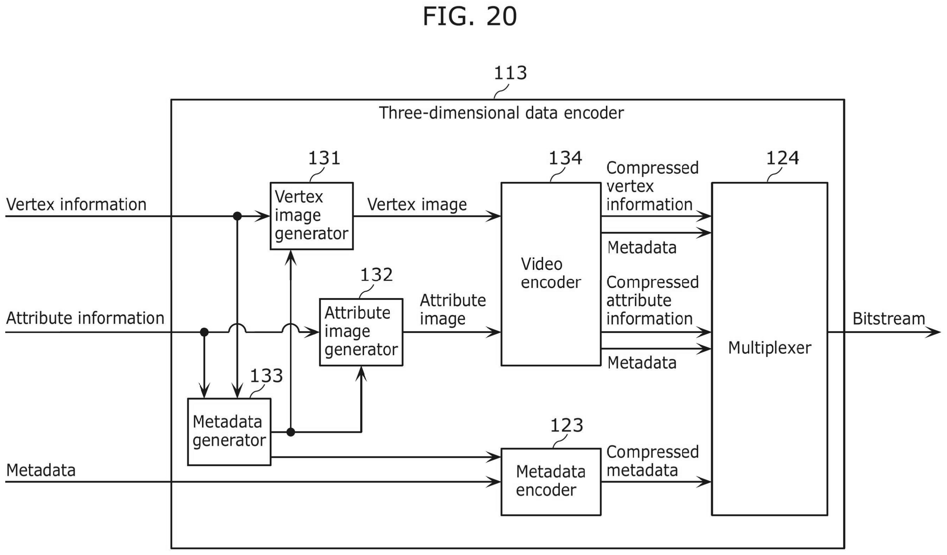

   FIG. 20 is a block diagram illustrating another configuration example of the three-dimensional data encoder according to the embodiment.
[FIG. 21]

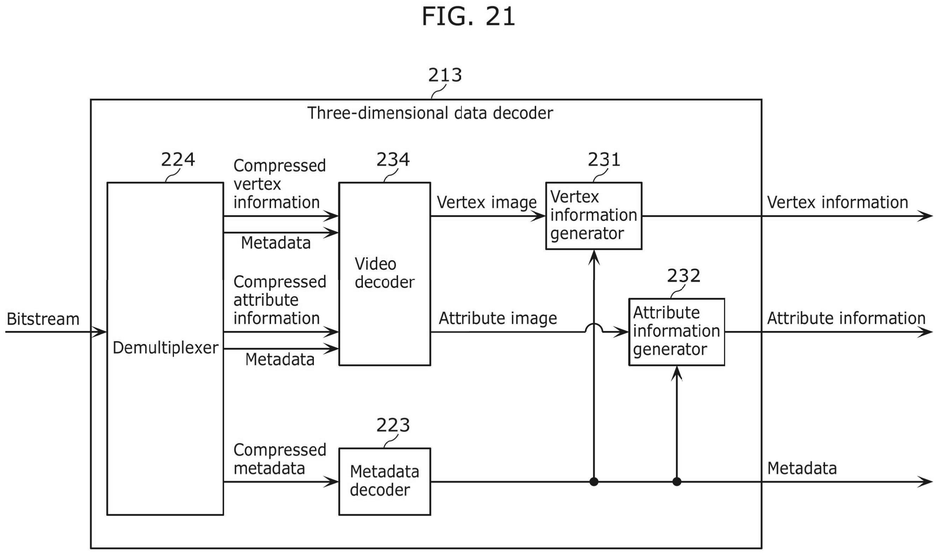

   FIG. 21 is a block diagram illustrating another configuration example of the three-dimensional data decoder according to the embodiment.
[FIG. 22]

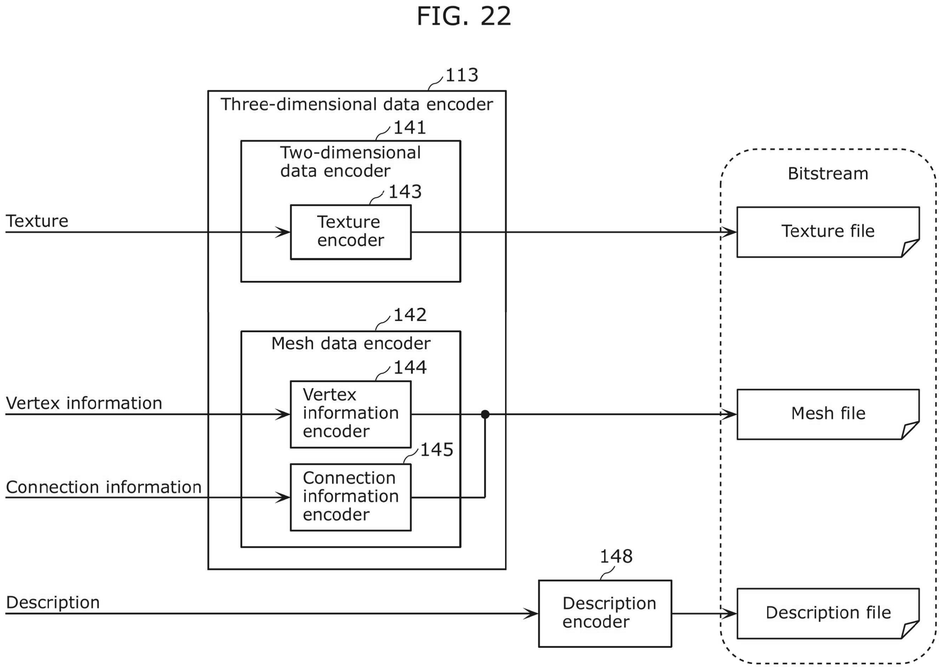

   FIG. 22 is a conceptual diagram illustrating a specific example of encoding processing according to the embodiment.
[FIG. 23]

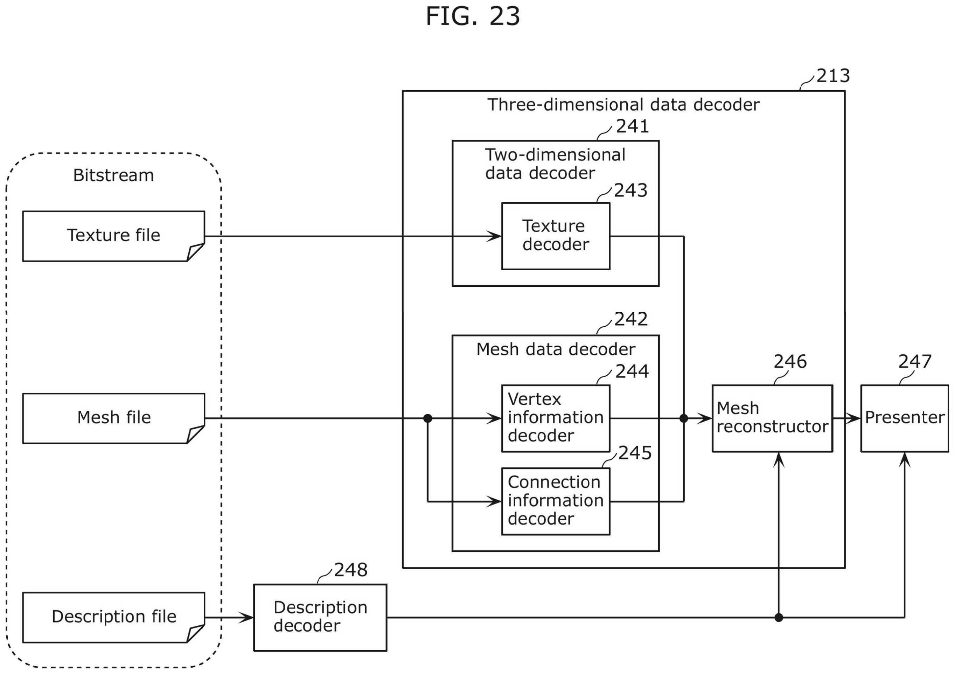

   FIG. 23 is a conceptual diagram illustrating a specific example of decoding processing according to the embodiment.
[FIG. 24]

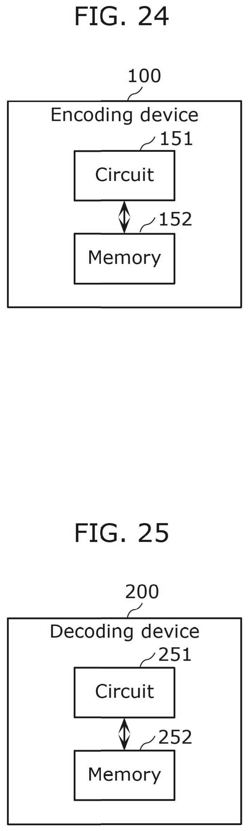

   FIG. 24 is a block diagram illustrating an implementation example of the encoding device according to the embodiment.
[FIG. 25]
   FIG. 25 is a block diagram illustrating an implementation example of the decoding device according to the embodiment.
[FIG. 26]

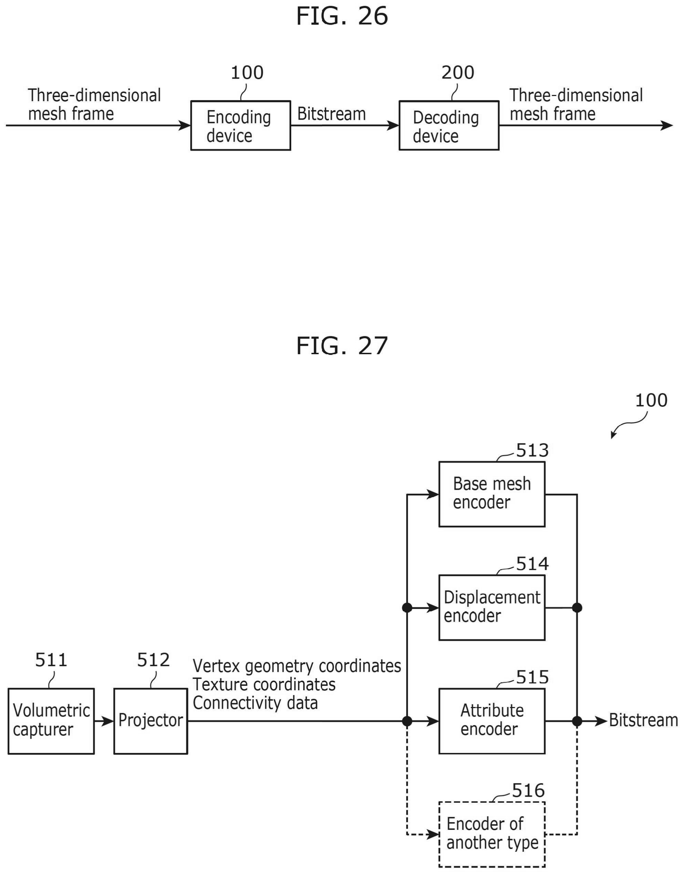

   FIG. 26 is a diagram illustrating a configuration of an encoding/decoding system according to the embodiment.
[FIG. 27]
   FIG. 27 is a diagram illustrating an example of the configuration of an encoding device according to the embodiment.
[FIG. 28]

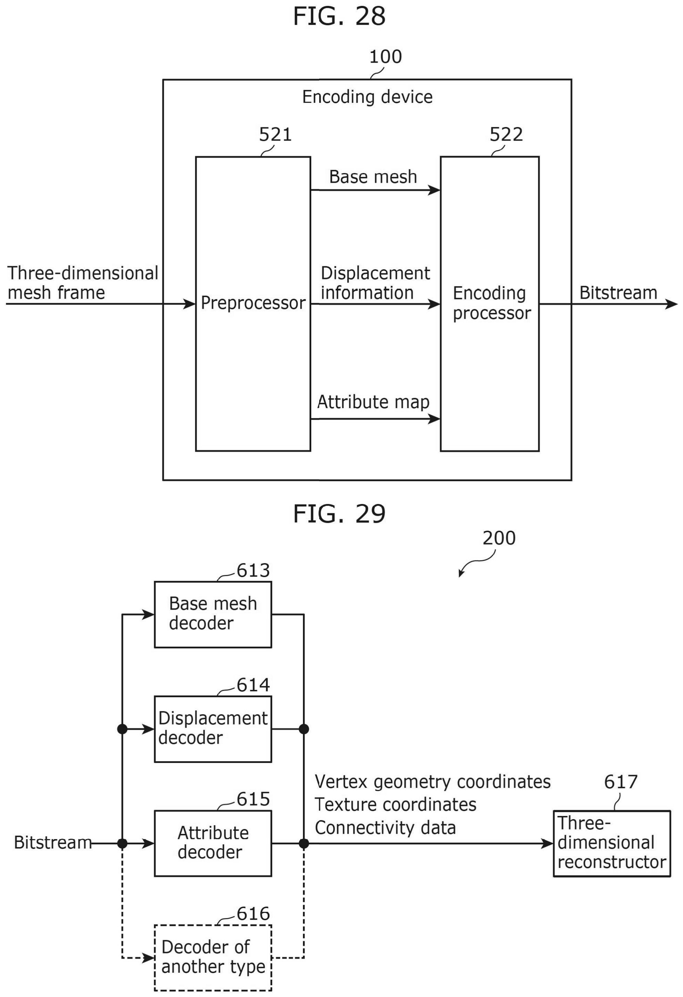

   FIG. 28 is a diagram illustrating another example of the configuration of the encoding device according to the embodiment.
[FIG. 29]
   FIG. 29 is a diagram illustrating an example of a configuration of a decoding device according to the embodiment.
[FIG. 30]

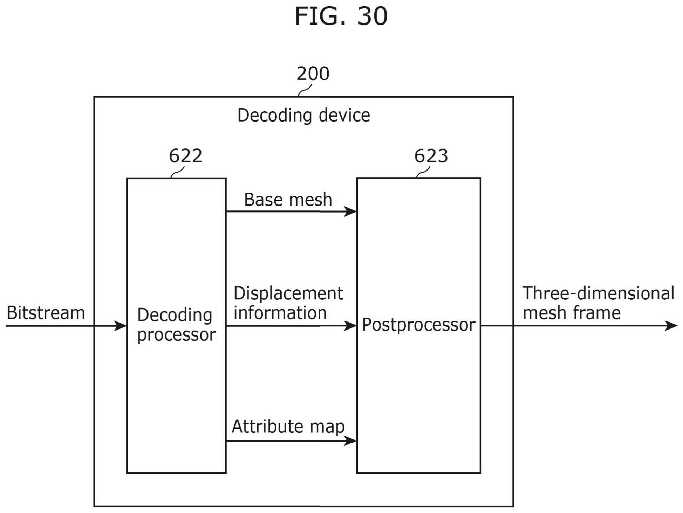

   FIG. 30 is a diagram illustrating another example of the configuration of the decoding device according to the embodiment.
[FIG. 31]

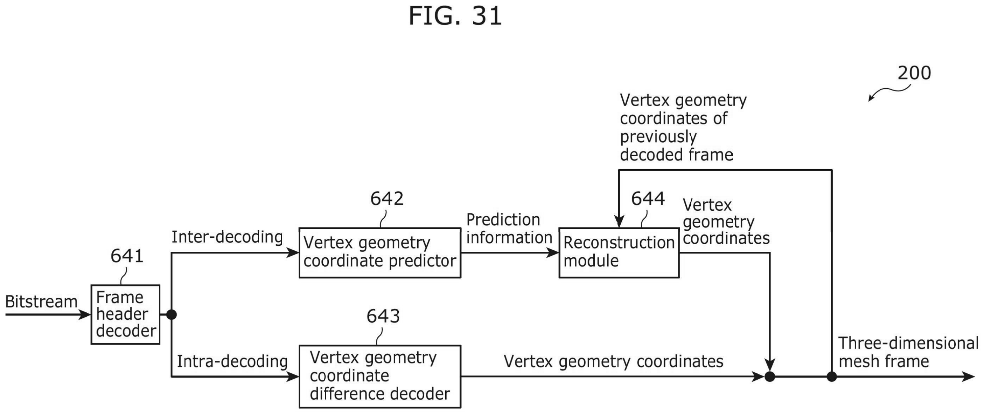

   FIG. 31 is a diagram illustrating another example of the configuration of the decoding device according to the embodiment.
[FIG. 32]

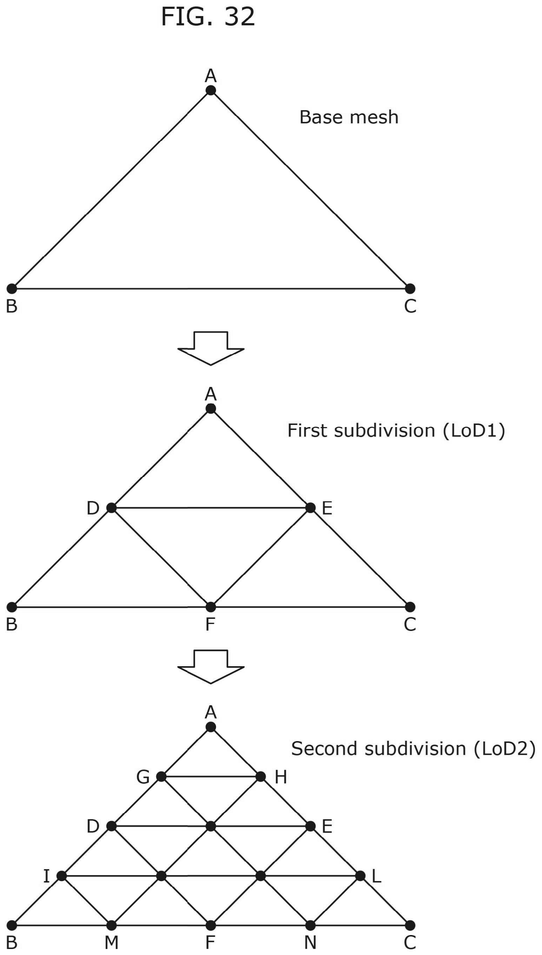

   FIG. 32 is a conceptual diagram illustrating an example of subdivision according to the embodiment.
[FIG. 33]

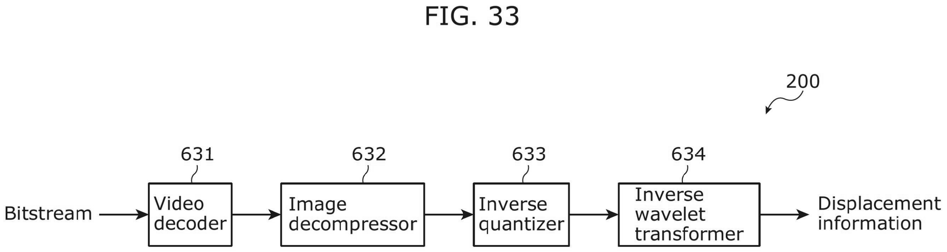

   FIG. 33 is a diagram illustrating another example of the configuration of the decoding device according to the embodiment.
[FIG. 34]

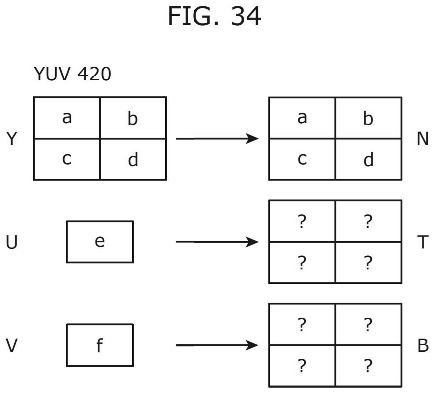

   FIG. 34 is a diagram for describing transformation of components of displacement vectors in a local coordinate system in the case where the YUV420 format is used.
[FIG. 35]

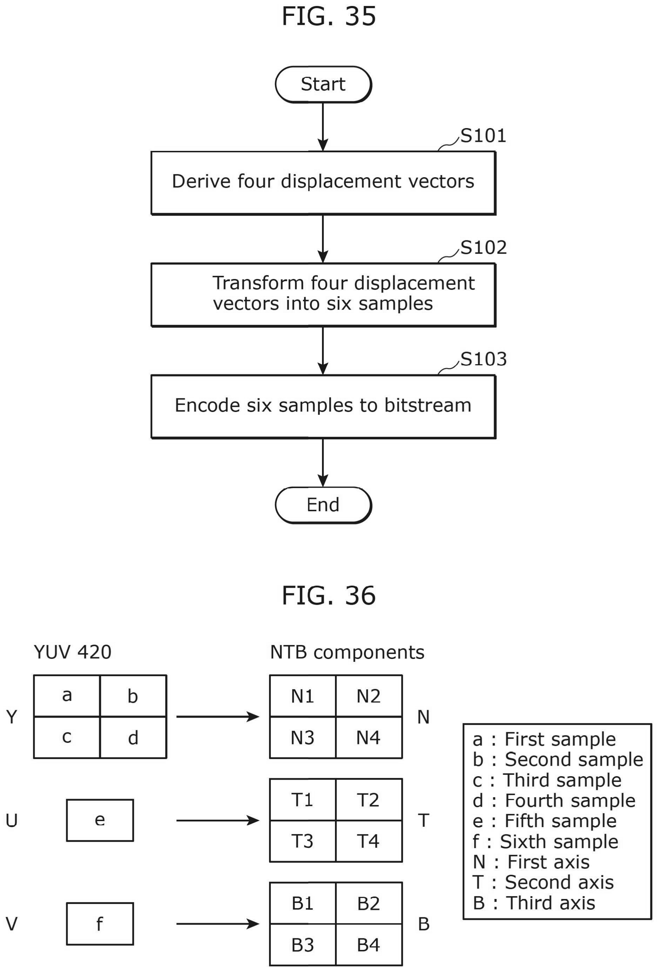

   FIG. 35 is a flowchart illustrating encoding processing according to the embodiment.
[FIG. 36]
   FIG. 36 is a diagram for describing component values of displacement vectors and samples according to the embodiment.
[FIG. 37]

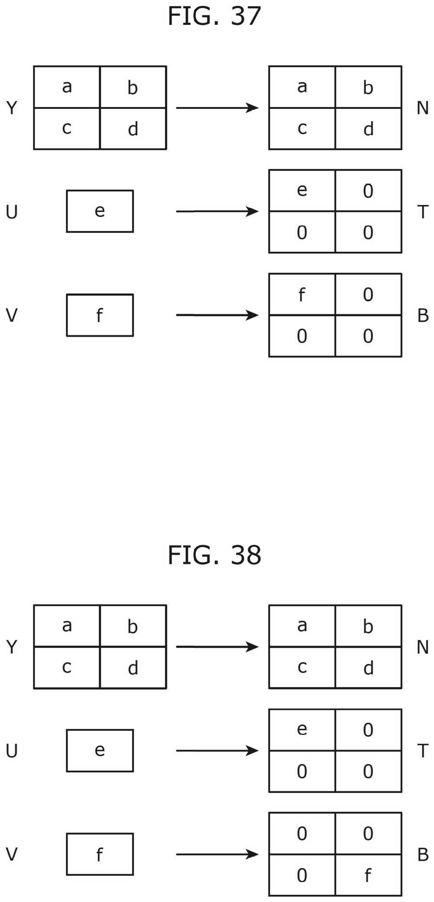

   FIG. 37 is a diagram illustrating a first example of the correspondence between the component values of the displacement vectors and the samples according to the embodiment.
[FIG. 38]
   FIG. 38 is a diagram illustrating a second example of the correspondence between the component values of the displacement vectors and the samples according to the embodiment.
[FIG. 39]

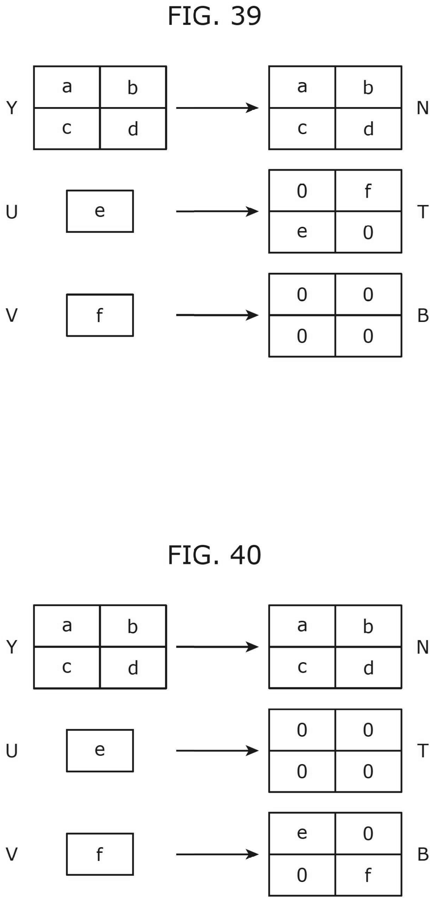

   FIG. 39 is a diagram illustrating a third example of the correspondence between the component values of the displacement vectors and the samples according to the embodiment.
[FIG. 40]
   FIG. 40 is a diagram illustrating a fourth example of the correspondence between the component values of the displacement vectors and the samples according to the embodiment.
[FIG. 41]

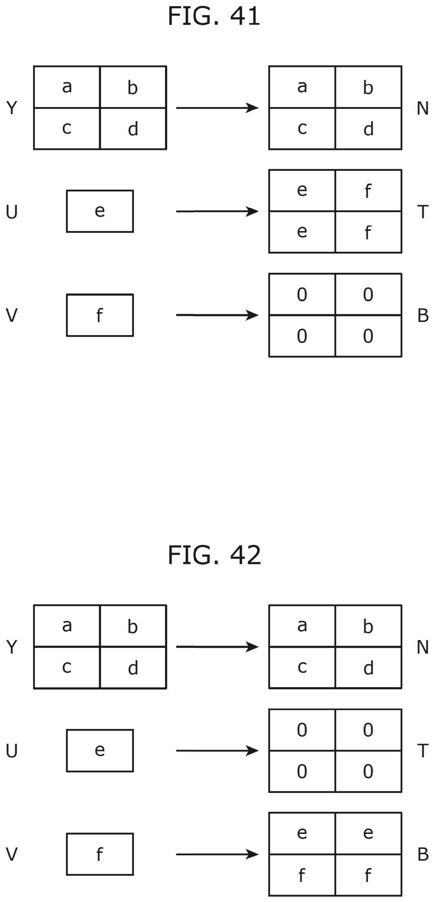

   FIG. 41 is a diagram illustrating a fifth example of the correspondence between the component values of the displacement vectors and the samples according to the embodiment.
[FIG. 42]
   FIG. 42 is a diagram illustrating a sixth example of the correspondence between the component values of the displacement vectors and the samples according to the embodiment.
[FIG. 43]

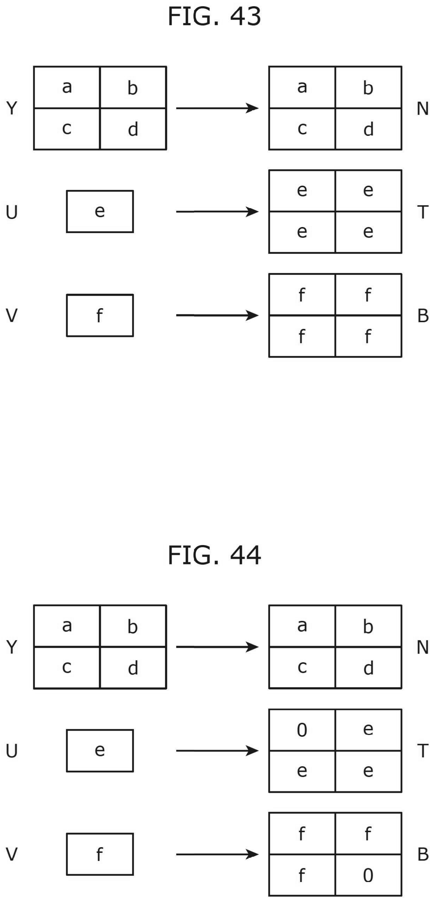

   FIG. 43 is a diagram illustrating a seventh example of the correspondence between the component values of the displacement vectors and the samples according to the embodiment.
[FIG. 44]
   FIG. 44 is a diagram illustrating an eighth example of the correspondence between the component values of the displacement vectors and the samples according to the embodiment.
[FIG. 45]

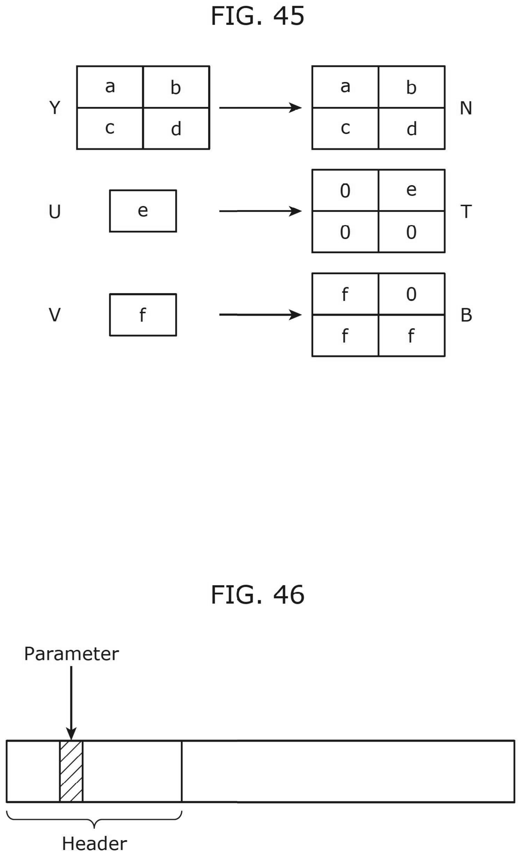

   FIG. 45 is a diagram illustrating a ninth example of the correspondence between the component values of the displacement vectors and the samples according to the embodiment.
[FIG. 46]
   FIG. 46 is a diagram illustrating a position of a parameter in a header of a bitstream according to the embodiment.
[FIG. 47]

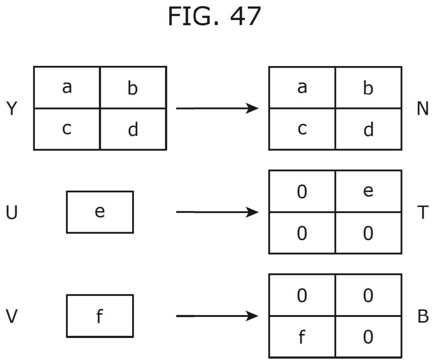

   FIG. 47 is a diagram illustrating a tenth example of the correspondence between the component values of the displacement vectors and the samples according to the embodiment.
[FIG. 48]

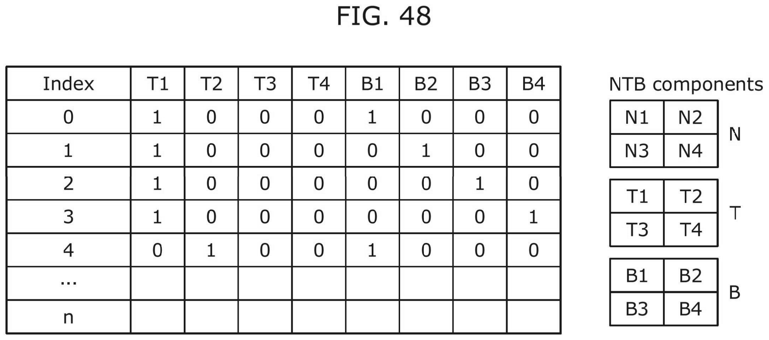

   FIG. 48 is a diagram illustrating an example of signaling of a parameter according to the embodiment.
[FIG. 49]

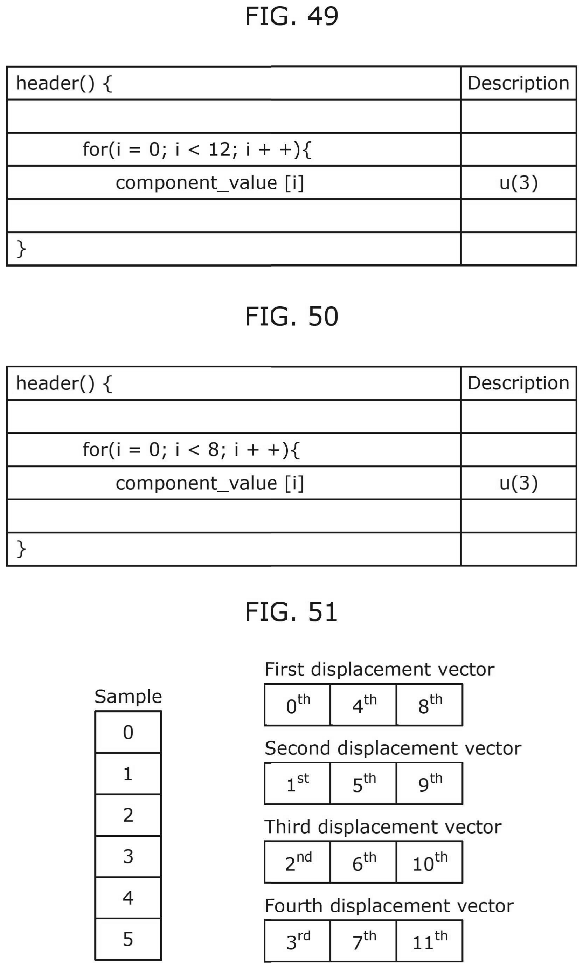

   FIG. 49 is a diagram illustrating a first example of signaling of a parameter in a header according to the embodiment.
[FIG. 50]
   FIG. 50 is a diagram illustrating a second example of the signaling of the parameter in the header according to the embodiment.
[FIG. 51]
   FIG. 51 is a diagram illustrating an example of transformation of six samples into four displacement vectors in a three-axis coordinate system according to the embodiment.
[FIG. 52]

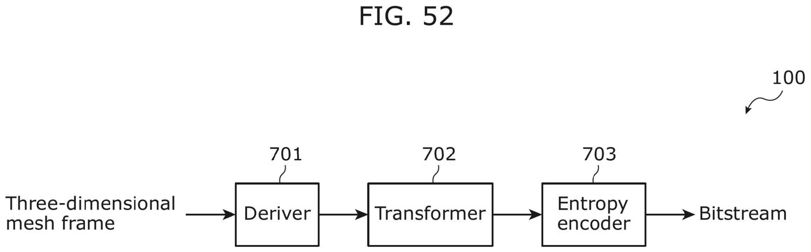

   FIG. 52 is a block diagram illustrating another example of the configuration of the encoding device according to the embodiment.
[FIG. 53]

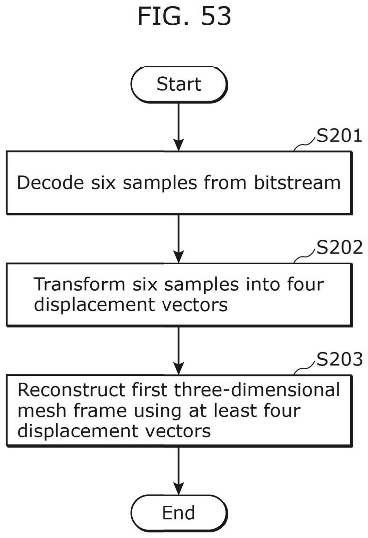

   FIG. 53 is a flowchart illustrating decoding processing according to the embodiment.
[FIG. 54]

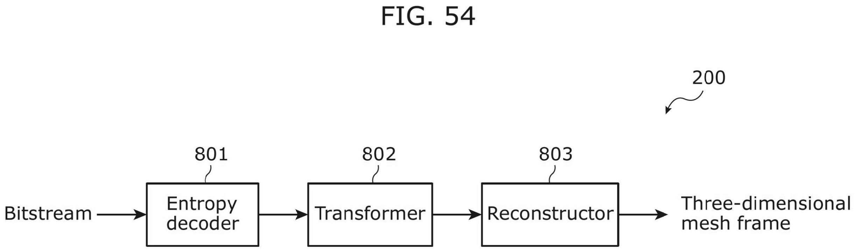

   FIG. 54 is a block diagram illustrating another example of the configuration of the decoding device according to the embodiment.
[FIG. 55]

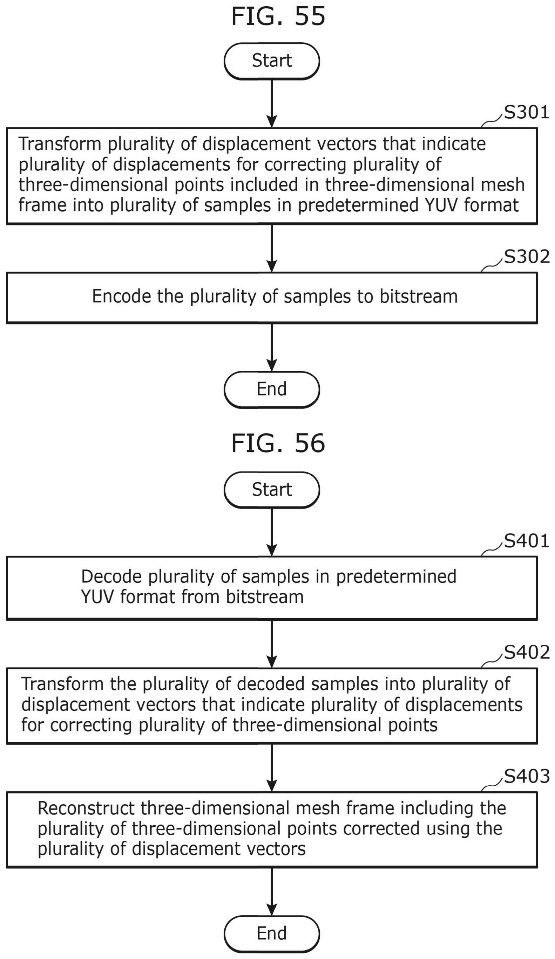

   FIG. 55 is a flowchart illustrating an example of basic encoding processing according to the embodiment.
[FIG. 56]
   FIG. 56 is a flowchart illustrating an example of basic decoding processing according to the embodiment.

### [Description of Embodiments]

### <Introduction>

For example, a three-dimensional mesh is used in computer graphic images. For example, a computer graphics image may include a plurality of frames that are temporally different from each other, and each of the plurality of frames may be expressed by a three-dimensional mesh. A frame expressed by a three-dimensional mesh is also referred to as a three-dimensional mesh frame.

Additionally, a three-dimensional mesh is constituted of vertex information indicating a position of each of a plurality of vertexes in a three-dimensional space, connection information indicating a connection relationship among the plurality of vertexes, and attribute information indicating an attribute of each vertex or each face. Each face is constructed according to the connection relationship among a plurality of vertexes. Various computer graphic images can be expressed by such three-dimensional meshes.

In addition, efficient encoding and decoding of three-dimensional meshes are anticipated for the purpose of transmission and accumulation of the three-dimensional meshes. For example, the encoding device encodes a displacement vector that indicates the amount of displacement of the position of a vertex between the first three-dimensional mesh and the second three-dimensional mesh.

Here, if all the values of a plurality of components (that is, component values) included in the displacement vector are encoded, the code amount is high.

In view of this, an encoding method according to Example 1 includes: transforming displacement vectors into samples in a predetermined YUV format, the displacement vectors representing displacements for correcting three-dimensional points included in a three-dimensional mesh frame; and encoding the samples to a bitstream. The samples include two or more Y samples corresponding to Y, one or more U samples corresponding to U, and one or more V samples corresponding to V. The two or more Y samples are more numerous than the one or more U samples and the one or more V samples.

Accordingly, the plurality of displacement vectors can be transformed into the plurality of samples using the predetermined YUV format. In addition, the plurality of displacement vectors can be encoded using a YUV format in which the total number of Y samples is greater than the total number of U samples and greater than the total number of V samples. By using such a YUV format, an appropriate tradeoff can be made between the quality of the reconstructed three-dimensional mesh frame and the size of the bitstream.

An encoding method according to Example 2 is the encoding method according to Example 1, in which each of the displacement vectors may include component values including a component value corresponding to a first axis, a component value corresponding to a second axis different from the first axis, and a component value corresponding to a third axis different from the first axis and the second axis, the first axis, the second axis, and the third axis being included in a predetermined three-axis coordinate system.

Accordingly, the number of the types of the samples is equal to the number of the component values of the displacement vectors corresponding to the axes. When component values of a plurality of displacement vectors corresponding to the same axis have similar values, for example, the component values can be transformed and encoded into the same type of samples, thereby improving the encoding efficiency.

An encoding method according to Example 3 is the encoding method according to Example 2, in which in the transforming, among the component values, all component values may be transformed into the two or more Y samples, all the component values being component values each of which is included in a different one of the displacement vectors and that correspond to the first axis.

Accordingly, when the component values of the plurality of displacement vectors corresponding to the first axis have similar values, the encoding efficiency can be improved.

An encoding method according to Example 4 is the encoding method according to Example 2 or Example 3, in which in the transforming, among the component values, only one or more of two or more component values may be transformed into the one or more U samples or the one or more V samples, the two or more component values being component values each of which is included in a different one of the displacement vectors and that correspond to the second axis or the third axis.

Accordingly, when the component values of the plurality of displacement vectors corresponding to the second axis or third axis have similar values, the encoding efficiency can be improved. In addition, by transforming only part of two or more component values into the U sample or V sample, the code amount can be reduced.

An encoding method according to Example 5 is the encoding method according to one of Example 2 to Example 4, in which the predetermined YUV format may include no values of the second axis.

Accordingly, the code amount can be reduced. In addition, when the values on the second axis (that is, the component values corresponding to the second axis) are close to 0, for example, the code amount can be reduced while reducing the decrease in quality of the reconstructed three-dimensional mesh frame.

An encoding method according to Example 6 is the encoding method according to one of Example 2 to Example 5, in which the predetermined YUV format may include no values of the third axis.

Accordingly, the code amount can be reduced. In addition, when the values on the third axis (that is, the component values corresponding to the third axis) are close to 0, for example, the code amount can be reduced while reducing the decrease in quality of the reconstructed three-dimensional mesh frame.

An encoding method according to Example 7 is the encoding method according to one of Example 2 to Example 6, in which the predetermined three-axis coordinate system may be a local coordinate system corresponding to each of the three-dimensional points.

Accordingly, important component values included in the displacement vectors, such as component values in axial directions corresponding to the normal directions of three-dimensional points in the local coordinate system, and the other component values can be transformed and encoded into different types of samples. Therefore, the code amount can be reduced while reducing the decrease in quality of the reconstructed three-dimensional mesh frame.

An encoding method according to Example 8 is the encoding method according to one of Example 2 to Example 6, in which the three-axis coordinate system may be a global coordinate system.

Accordingly, the encoding of displacement vectors using a predetermined YUV format can be more easily used.

An encoding method according to Example 9 is the encoding method according to one of Example 1 to Example 8, in which the predetermined YUV format may be a YUV 420 format or a YUV 422 format.

Accordingly, by using such a YUV format, an appropriate tradeoff can be made between the quality of the reconstructed three-dimensional mesh frame and the size of the bitstream.

A decoding method according to Example 10 includes: decoding samples in a predetermined YUV format from a bitstream; transforming the samples decoded into displacement vectors representing displacements for correcting three-dimensional points; and reconstructing a three-dimensional mesh frame including the three-dimensional points corrected using the displacement vectors, in which the samples include two or more Y samples corresponding to Y, one or more U samples corresponding to U, and one or more V samples corresponding to V, and the two or more Y samples are more numerous than the one or more U samples and the one or more V samples.

Accordingly, the plurality of samples transformed using the predetermined YUV format can be transformed into the plurality of displacement vectors. In addition, the plurality of samples can be decoded using a YUV format in which the total number of Y samples is greater than the total number of U samples and greater than the total number of V samples. By using such a YUV format, an appropriate tradeoff can be made between the quality of the reconstructed three-dimensional mesh frame and the size of the bitstream.

A decoding method according to Example 11 is the decoding method according to Example 10, in which each of the displacement vectors may include component values including a component value corresponding to a first axis, a component value corresponding to a second axis different from the first axis, and a component value corresponding to a third axis different from the first axis and the second axis, the first axis, the second axis, and the third axis being included in a predetermined three-axis coordinate system.

Accordingly, the number of the types of the samples is equal to the number of the component values of the displacement vectors corresponding to the axes. When component values of a plurality of displacement vectors corresponding to the same axis have similar values, the decoding efficiency can be improved.

A decoding method according to Example 12 is the decoding method according to Example 11, in which in the transforming, all the two or more Y samples may be transformed into, among the component values, component values each of which is included in a different one of the displacement vectors and that correspond to the first axis.

Accordingly, when the component values of the plurality of displacement vectors corresponding to the first axis have similar values, the decoding efficiency can be improved.

A decoding method according to Example 13 is the decoding method according to Example 11 or Example 12, in which in the transforming, the one or more U samples or the one or more V samples may be transformed into at least one of two or more component values each of which is included in a different one of the displacement vectors and that correspond to the second axis or the third axis.

Accordingly, when the component values of the plurality of displacement vectors corresponding to the second axis or third axis have similar values, the decoding efficiency can be improved.

A decoding method according to Example 14 is the decoding method according to one of Example 11 to Example 13, in which in the transforming, one or more component values into which none of the samples is transformed may be caused to be 0, the one or more component values being included in, among the component values, two or more component values each of which is included in a different one of the displacement vectors and that correspond to the second axis or the third axis.

Accordingly, when the two or more component values described above are close to 0, the decoding processing can be reduced while reducing the decrease in quality of the reconstructed three-dimensional mesh frame and reducing the size of the bitstream.

A decoding method according to Example 15 is the decoding method according to one of Example 11 to Example 14, in which the predetermined three-axis coordinate system may be a local coordinate system corresponding to each of the three-dimensional points.

Accordingly, when important component values included in the displacement vectors, such as component values in axial directions corresponding to the normal directions of three-dimensional points in the local coordinate system, and the other component values are transformed into different types of samples, each of such samples can be decoded. Therefore, the decoding processing can be reduced.

A decoding method according to Example 16 is the decoding method according to one of Example 11 to Example 14, in which the three-axis coordinate system may be a global coordinate system.

Accordingly, the decoding of displacement vectors encoded using a predetermined YUV format can be more easily used.

A decoding method according to Example 17 is the decoding method according to one of Example 10 to Example 16, in which the predetermined YUV format may be a YUV 420 format or a YUV 422 format.

Accordingly, by using such a YUV format, an appropriate tradeoff can be made between the quality of the reconstructed three-dimensional mesh frame and the size of the bitstream.

An encoding device according to Example 18 includes: a memory; and a circuit accessible to the memory, in which in operation, the circuit: transforms displacement vectors into samples in a predetermined YUV format, the displacement vectors representing displacements for correcting three-dimensional points included in a three-dimensional mesh frame; and encodes the samples to a bitstream, the samples include two or more Y samples corresponding to Y, one or more U samples corresponding to U, and one or more V samples corresponding to V, and the two or more Y samples are more numerous than the one or more U samples and the one or more V samples.

Accordingly, the encoding device can transform the plurality of displacement vectors into the plurality of samples using the predetermined YUV format. In addition, the encoding device can encode the plurality of displacement vectors using a YUV format in which the total number of Y samples is greater than the total number of U samples and greater than the total number of V samples. By using such a YUV format, an appropriate tradeoff can be made between the quality of the reconstructed three-dimensional mesh frame and the size of the bitstream.

A decoding device according to Example 19 includes: a memory; and a circuit accessible to the memory, in which in operation, the circuit: decodes samples in a predetermined YUV format from a bitstream; transforms the samples decoded into displacement vectors representing displacements for correcting three-dimensional points; and reconstructs a three-dimensional mesh frame including the three-dimensional points corrected using the displacement vectors, the samples include two or more Y samples corresponding to Y, one or more U samples corresponding to U, and one or more V samples corresponding to V, and the two or more Y samples are more numerous than the one or more U samples and the one or more V samples.

Accordingly, the decoding device can transform the plurality of samples transformed using the predetermined YUV format into the plurality of displacement vectors. In addition, the decoding device can decode the plurality of samples using a YUV format in which the total number of Y samples is greater than the total number of U samples and greater than the total number of V samples. By using such a YUV format, an appropriate tradeoff can be made between the quality of the reconstructed three-dimensional mesh frame and the size of the bitstream.

Moreover, these general or specific aspects may be implemented using a system, a device, a method, an integrated circuit, a computer program, or a non-transitory computer-readable recording medium such as a CD-ROM, or any combination of systems, devices, methods, integrated circuits, computer programs, and recording media.

### <Expressions and terms>

The following expressions and terms will be used herein.

### (1) Three-dimensional mesh

A three-dimensional mesh is a set of a plurality of faces and indicates, for example, a three-dimensional object. In addition, a three-dimensional mesh is mainly constituted of vertex information, connection information, and attribute information. A three-dimensional mesh may be expressed as a polygon mesh or a mesh. In addition, a three-dimensional mesh may have a temporal change. A three-dimensional mesh may include metadata related to vertex information, connection information, and attribute information or other additional information.

### (2) Vertex information

Vertex information is information indicating a vertex. For example, vertex information indicates a position of a vertex in a three-dimensional space. In addition, a vertex corresponds to a vertex of a face that constitutes a three-dimensional mesh. Vertex information may be expressed as "geometry". In addition, vertex information may also be expressed as position information.

### (3) Connection information

Connection information is information indicating a connection between vertexes. For example, connection information indicates a connection for constructing a face or an edge of a three-dimensional mesh. Connection information may be expressed as "connectivity". In addition, connection information may also be expressed as face information.

### (4) Attribute information

Attribute information is information indicating an attribute of a vertex or a face. For example, attribute information indicates an attribute such as a color, an image, a normal vector, and the like associated with a vertex or a face. Attribute information may be expressed as "texture".

### (5) Face

A face is an element that constitutes a three-dimensional mesh. Specifically, a face is a polygon on a plane in a three-dimensional space. For example, a face can be determined as a triangle in the three-dimensional space.

### (6) Plane

A plane is a two-dimensional plane in a three-dimensional space. For example, a polygon is formed on a plane and a plurality of polygons are formed on a plurality of planes.

### (7) Bitstream

A bitstream corresponds to encoded information. A bitstream can also be expressed as a stream, an encoded bitstream, a compressed bitstream, or an encoded signal.

### (8) Encoding and decoding

The expression "encode" may be replaced with expressions such as store, include, write, describe, signalize, send out, notify, save, or compress and such expressions may be interchangeably used. For example, encoding information may mean including information in a bitstream. In addition, encoding information in a bitstream may mean encoding the information and generating a bitstream that includes the encoded information.

In addition, the expression "decode" may be replaced with expressions such as read, interpret, scan, load, derive, acquire, receive, extract, restore, reconstruct, decompress, or expand and such expressions may be interchangeably used. For example, decoding information may mean acquiring information from a bitstream. In addition, decoding information from a bitstream may mean decoding the bitstream and acquiring information included in the bitstream.

### (9) Ordinal numbers

In the description, an ordinal number such as first, second, or the like may be affixed to a constituent element or the like. Such ordinal numbers may be replaced as necessary. In addition, an ordinal number may be newly affixed to or removed from a constituent element or the like. Furthermore, the ordinal numbers may be affixed to elements in order to identify the elements and may not correspond to any meaningful order.

### <Three-dimensional mesh>

FIG. 1 is a conceptual diagram illustrating a three-dimensional mesh according to the present embodiment. The three-dimensional mesh is constituted of a plurality of faces. For example, each face is a triangle. Vertexes of the triangles are determined in a three-dimensional space. In addition, a three-dimensional mesh indicates a three-dimensional object. Each face may have a color or an image.

FIG. 2 is a conceptual diagram illustrating basic elements of a three-dimensional mesh according to the present embodiment. The three-dimensional mesh is constituted of vertex information, connection information, and attribute information. Vertex information indicates a position of a vertex of a face in a three-dimensional space. Connection information indicates a connection between vertexes. A face can be identified based on vertex information and connection information. In other words, an uncolored three-dimensional object is formed in a three-dimensional space based on vertex information and connection information.

Attribute information may be associated with a vertex or associated with a face. Attribute information associated with a vertex may be expressed as "attribute per point". Attribute information associated with a vertex may indicate an attribute of the vertex itself or indicate an attribute of a face connected to the vertex.

For example, a color may be associated with a vertex as attribute information. The color associated with the vertex may be the color of the vertex or the color of a face connected to the vertex. The color of the face may be an average of a plurality of colors associated with a plurality of vertexes of the face. In addition, a normal vector may be associated with a vertex or a face as attribute information. Such a normal vector can express a front and a rear of a face.

In addition, a two-dimensional image may be associated with a face as attribute information. The two-dimensional image associated with a face is also expressed as a texture image or an "attribute map". In addition, information indicating mapping between a face and a two-dimensional image may be associated with the face as attribute information. Such information indicating mapping may be expressed as mapping information, vertex information of a texture image, or an "attribute UV coordinate".

Furthermore, information on a color, an image, a moving image, and the like to be used as attribute information may be expressed as "parametric space".

A texture is reflected in a three-dimensional object based on such attribute information. In other words, a colored three-dimensional object is formed in a three-dimensional space based on vertex information, connection information, and attribute information.

Note that while attribute information is associated with a vertex or a face in the description given above, alternatively, attribute information may be associated with an edge.

FIG. 3 is a conceptual diagram illustrating mapping according to the present embodiment. For example, a region of a two-dimensional image on a two-dimensional plane can be mapped to a face of a three-dimensional mesh in a three-dimensional space. Specifically, coordinate information of a region in the two-dimensional image is associated with a face of the three-dimensional mesh. Accordingly, an image of the mapped region in the two-dimensional image is reflected in the face of the three-dimensional mesh.

The use of mapping enables a two-dimensional image to be used as attribute information to be separated from the three-dimensional mesh. For example, in encoding of the three-dimensional mesh, the two-dimensional image may be encoded based on an image encoding system or a video encoding system.

### <System configuration>

FIG. 4 is a block diagram illustrating a configuration example of an encoding/decoding system according to the present embodiment. In FIG. 4, the encoding/decoding system includes encoding device 100 and decoding device 200.

For example, encoding device 100 acquires a three-dimensional mesh and encodes the three-dimensional mesh into a bitstream. In addition, encoding device 100 outputs the bitstream to network 300. For example, the bitstream includes an encoded three-dimensional mesh and control information for decoding the encoded three-dimensional mesh. Encoding of the three-dimensional mesh causes information of the three-dimensional mesh to be compressed.

Network 300 transmits the bitstream from encoding device 100 to decoding device 200. Network 300 may be the Internet, a wide area network (WAN), a local area network (LAN), or a combination thereof. Network 300 is not necessarily limited to two-way communication and may be a unidirectional communication network for terrestrial digital broadcasting, satellite broadcasting, or the like.

In addition, network 300 may be replaced with a recording medium such as a DVD (digital versatile disc), a BD (Blu-Ray Disc (registered trademark)), or the like.

Decoding device 200 acquires a bitstream and decodes a three-dimensional mesh from the bitstream. Decoding of the three-dimensional mesh causes information of the three-dimensional mesh to be expanded. For example, decoding device 200 decodes a three-dimensional mesh according to a decoding method corresponding to an encoding method used by encoding device 100 to encode the three-dimensional mesh. In other words, encoding device 100 and decoding device 200 perform encoding and decoding according to an encoding method and a decoding method which correspond to each other.

Note that the three-dimensional mesh before encoding can also be expressed as an original three-dimensional mesh. In addition, the three-dimensional mesh after decoding is also expressed as a reconstructed three-dimensional mesh.

### <Encoding device>

FIG. 5 is a block diagram illustrating a configuration example of encoding device 100 according to the present embodiment. For example, encoding device 100 includes vertex information encoder 101, connection information encoder 102, and attribute information encoder 103.

Vertex information encoder 101 is an electric circuit which encodes vertex information. For example, vertex information encoder 101 encodes vertex information into a bitstream according to a format defined with respect to the vertex information.

Connection information encoder 102 is an electric circuit which encodes connection information. For example, connection information encoder 102 encodes connection information into a bitstream according to a format defined with respect to the connection information.

Attribute information encoder 103 is an electric circuit which encodes attribute information. For example, attribute information encoder 103 encodes attribute information into a bitstream according to a format defined with respect to the attribute information.

Variable-length coding or fixed length coding may be used for encoding vertex information, connection information, and attribute information. The variable-length coding may accommodate Huffman coding, context-adaptive binary arithmetic coding (CABAC), or the like.

Vertex information encoder 101, connection information encoder 102, and attribute information encoder 103 may be integrated. Alternatively, each of vertex information encoder 101, connection information encoder 102, and attribute information encoder 103 may be more finely segmentalized into a plurality of constituent elements.

FIG. 6 is a block diagram illustrating another configuration example of encoding device 100 according to the present embodiment. For example, in addition to the components illustrated in FIG. 5, encoding device 100 includes preprocessor 104 and postprocessor 105.

Preprocessor 104 is an electric circuit which performs processing before encoding of vertex information, connection information, and attribute information. For example, preprocessor 104 may perform transformation processing, demultiplexing, multiplexing, or the like with respect to a three-dimensional mesh before encoding. More specifically, for example, preprocessor 104 may demultiplex vertex information, connection information, and attribute information from the three-dimensional mesh before encoding.

Postprocessor 105 is an electric circuit which performs processing after the encoding of vertex information, connection information, and attribute information. For example, postprocessor 105 may perform transformation processing, demultiplexing, multiplexing, or the like with respect to vertex information, connection information, and attribute information after encoding. More specifically, for example, postprocessor 105 may multiplex vertex information, connection information, and attribute information after encoding into a bitstream. In addition, for example, postprocessor 105 may further perform variable-length coding with respect to vertex information, connection information, and attribute information after the encoding.

### <Decoding device>

FIG. 7 is a block diagram illustrating a configuration example of decoding device 200 according to the present embodiment. For example, decoding device 200 includes vertex information decoder 201, connection information decoder 202, and attribute information decoder 203.

Vertex information decoder 201 is an electric circuit which decodes vertex information. For example, vertex information decoder 201 decodes vertex information from a bitstream according to a format defined with respect to the vertex information.

Connection information decoder 202 is an electric circuit which decodes connection information. For example, connection information decoder 202 decodes connection information from a bitstream according to a format defined with respect to the connection information.

Attribute information decoder 203 is an electric circuit which decodes attribute information. For example, attribute information decoder 203 decodes attribute information from a bitstream according to a format defined with respect to the attribute information.

Variable-length decoding or fixed length decoding may be used for decoding vertex information, connection information, and attribute information. The variable-length decoding may accommodate Huffman coding, context-adaptive binary arithmetic coding (CABAC), or the like.

Vertex information decoder 201, connection information decoder 202, and attribute information decoder 203 may be integrated. Alternatively, each of vertex information decoder 201, connection information decoder 202, and attribute information decoder 203 may be more finely segmentalized into a plurality of constituent elements.

FIG. 8 is a block diagram illustrating another configuration example of decoding device 200 according to the present embodiment. For example, in addition to the components illustrated in FIG. 7, decoding device 200 includes preprocessor 204 and postprocessor 205.

Preprocessor 204 is an electric circuit which performs processing before decoding of vertex information, connection information, and attribute information. For example, preprocessor 204 may perform transformation processing, demultiplexing, multiplexing, or the like with respect to a bitstream before decoding of vertex information, connection information, and attribute information.

More specifically, for example, preprocessor 204 may demultiplex, from a bitstream, a sub-bitstream corresponding to vertex information, a sub-bitstream corresponding to connection information, and a sub-bitstream corresponding to attribute information. In addition, for example, preprocessor 204 may perform variable-length decoding with respect to the bitstream in advance before decoding of vertex information, connection information, and attribute information.

Postprocessor 205 is an electric circuit which performs processing after the decoding of vertex information, connection information, and attribute information. For example, postprocessor 205 may perform transformation processing, demultiplexing, multiplexing, or the like with respect to vertex information, connection information, and attribute information after decoding. More specifically, for example, postprocessor 205 may multiplex vertex information, connection information, and attribute information after decoding into a three-dimensional mesh.

### <Bitstream>

Vertex information, connection information, and attribute information are encoded and stored in a bitstream. A relationship between these pieces of information and the bitstream will be described below.

FIG. 9 is a conceptual diagram illustrating a configuration example of a bitstream according to the present embodiment. In this example, vertex information, connection information, and attribute information are integrated in the bitstream. For example, vertex information, connection information, and attribute information may be included in one file.

In addition, a plurality of portions of the pieces of information may be sequentially stored such as a first portion of vertex information, a first portion of connection information, a first portion of attribute information, a second portion of vertex information, a second portion of connection information, a second portion of attribute information, ... The plurality of portions may correspond to a plurality of temporally different portions, correspond to a plurality of spatially different portions, or correspond to a plurality of different faces.

Furthermore, an order of storage of vertex information, connection information, and attribute information is not limited to the example described above and an order of storage that differs from the above may be used.

FIG. 10 is a conceptual diagram illustrating another configuration example of a bitstream according to the present embodiment. In the example, a plurality of files are included in a bitstream and vertex information, connection information, and attribute information are respectively stored in different files. While a file including vertex information, a file including connection information, and a file including attribute information are illustrated here, storage formats are not limited to this example. For example, two types of information among vertex information, connection information, and attribute information may be included in one file and the one remaining type of information may be included in another file.

Alternatively, the pieces of information can be stored by being divided into a larger number of files. For example, a plurality of portions of vertex information may be stored in a plurality of files, a plurality of portions of connection information may be stored in a plurality of files, and a plurality of portions of attribute information may be stored in a plurality of files. The plurality of portions may correspond to a plurality of temporally different portions, correspond to a plurality of spatially different portions, or correspond to a plurality of different faces.

Furthermore, an order of storage of vertex information, connection information, and attribute information is not limited to the example described above and an order of storage that differs from the above may be used.

FIG. 11 is a conceptual diagram illustrating another configuration example of a bitstream according to the present embodiment. In the example, a bitstream is constituted of a plurality of separable sub-bitstreams and vertex information, connection information, and attribute information are respectively stored in different sub-bitstreams.

While a sub-bitstream including vertex information, a sub-bitstream including connection information, and a sub-bitstream including attribute information are illustrated here, storage formats are not limited to this example.

For example, two types of information among vertex information, connection information, and attribute information may be included in one sub-bitstream and the one remaining type of information may be included in another sub-bitstream. Specifically, attribute information such as a two-dimensional image may be stored in a sub-bitstream conforming to an image coding system separately from a sub-bitstream of vertex information and connection information.

In addition, each sub-bitstream may include a plurality of files. Furthermore, a plurality of portions of vertex information may be stored in a plurality of files, a plurality of portions of connection information may be stored in a plurality of files, and a plurality of portions of attribute information may be stored in a plurality of files.

### <Specific example>

FIG. 12 is a block diagram illustrating a specific example of the encoding/decoding system according to the present embodiment. In FIG. 12, the encoding/decoding system includes three-dimensional data encoding system 110, three-dimensional data decoding system 210, and external connector 310.

Three-dimensional data encoding system 110 includes controller 111, input/output processor 112, three-dimensional data encoder 113, three-dimensional data generator 115, and system multiplexer 114. Three-dimensional data decoding system 210 includes controller 211, input/output processor 212, three-dimensional data decoder 213, system demultiplexer 214, presenter 215, and user interface 216.

In three-dimensional data encoding system 110, sensor data is input from a sensor terminal to three-dimensional data generator 115. Three-dimensional data generator 115 generates three-dimensional data that is point cloud data, mesh data, or the like from the sensor data and inputs the three-dimensional data to three-dimensional data encoder 113.

For example, three-dimensional data generator 115 generates vertex information and generates connection information and attribute information which correspond to the vertex information. Three-dimensional data generator 115 may process vertex information when generating connection information and attribute information. For example, three-dimensional data generator 115 may reduce a data amount by deleting overlapping vertexes or transform vertex information (position shift, rotation, normalization, or the like). In addition, three-dimensional data generator 115 may render attribute information.

While three-dimensional data generator 115 is a constituent element of three-dimensional data encoding system 110 in FIG. 12, three-dimensional data generator 115 may be disposed on the outside independent of three-dimensional data encoding system 110.

For example, a sensor terminal that provides sensor data for generating three-dimensional data may be a mobile object such as an automobile, a flying object such as an airplane, a mobile terminal, a camera, or the like. Alternatively, a range sensor such as LIDAR, a millimeter-wave radar, an infrared sensor, or a range finder, a stereo camera, a combination of a plurality of monocular cameras, or the like may be used as the sensor terminal.

The sensor data may be a distance (position) of an object, a monocular camera image, a stereo camera image, a color, a reflectance, an attitude or an orientation of a sensor, a gyro, a sensing position (GPS information or elevation), a velocity, an acceleration, a time of day of sensing, air temperature, air pressure, humidity, magnetism, or the like.

Three-dimensional data encoder 113 corresponds to encoding device 100 illustrated in FIG. 5 and the like. For example, three-dimensional data encoder 113 encodes three-dimensional data and generates encoded data. In addition, three-dimensional data encoder 113 generates control information when encoding the three-dimensional data. Furthermore, three-dimensional data encoder 113 inputs the encoded data to system multiplexer 114 together with the control information.

The encoding system of three-dimensional data may be an encoding system using geometry or an encoding system using a video codec. In this case, an encoding system using geometry may also be expressed as a geometry-based encoding system. An encoding system using a video codec may also be expressed as a video-based encoding system.

System multiplexer 114 multiplexes encoded data and control information input from three-dimensional data encoder 113 and generates multiplexed data using a prescribed multiplexing system. System multiplexer 114 may multiplex other media such as video, audio, subtitles, application data, or document files, reference time information, or the like together with the encoded data and control information of three-dimensional data. Furthermore, system multiplexer 114 may multiplex attribute information related to sensor data or three-dimensional data.

For example, multiplexed data has a file format for accumulation, a packet format for transmission, or the like. ISOBMFF or an ISOBMFF-based system may be used as an accumulation system or a transmission system. Alternatively, MPEG-DASH, MMT, MPEG-2 TS Systems, RTP, or the like may be used.

In addition, multiplexed data is output as a transmission signal by input/output processor 112 to external connector 310. The multiplexed data may be transmitted as a transmission signal in a wired manner or in a wireless manner. Alternatively, the multiplexed data is accumulated in an internal memory or a storage device. The multiplexed data may be transmitted via the Internet to a cloud server or stored in an external storage device.

For example, the transmission or accumulation of the multiplexed data is performed by a method in accordance with a medium for transmission or accumulation such as broadcasting or communication. As a communication protocol, http, ftp, TCP, UDP, IP, or a combination thereof may be used. In addition, a pull-type communication scheme may be used or a push-type communication scheme may be used.

Ethernet (registered trademark), USB, RS-232C, HDMI (registered trademark), a coaxial cable, or the like may be used for wired transmission. In addition, 3GPP (registered trademark), 3G/4G/5G as specified by IEEE, a wireless LAN, Bluetooth, or a millimeter-wave may be used for wireless transmission. Furthermore, for example, DVB-T2, DVB-S2, DVB-C2, ATSC 3.0, ISDB-S3, or the like may be used as a broadcasting system.

Note that sensor data may be input to three-dimensional data generator 115 or system multiplexer 114. In addition, three-dimensional data or encoded data may be output as-is as a transmission signal to external connector 310 via input/output processor 112. The transmission signal output from three-dimensional data encoding system 110 is input to three-dimensional data decoding system 210 via external connector 310.

In addition, each operation of three-dimensional data encoding system 110 may be controlled by controller 111 which executes application programs.

In three-dimensional data decoding system 210, a transmission signal is input to input/output processor 212. Input/output processor 212 decodes multiplexed data having a file format or a packet format from the transmission signal and inputs the multiplexed data to system demultiplexer 214. System demultiplexer 214 acquires encoded data and control information from the multiplexed data and inputs the encoded data and the control information to three-dimensional data decoder 213. System demultiplexer 214 may extract other media, reference time information, or the like from the multiplexed data.

Three-dimensional data decoder 213 corresponds to decoding device 200 illustrated in FIG. 7 and the like. For example, three-dimensional data decoder 213 decodes three-dimensional data from the encoded data based on an encoding system specified in advance. Subsequently, the three-dimensional data is presented to a user by presenter 215.

In addition, additional information such as sensor data may be input to presenter 215. Presenter 215 may present three-dimensional data based on the additional information. In addition, an instruction by the user may be input to user interface 216 from a user terminal. Furthermore, presenter 215 may present three-dimensional data based on the input instruction.

Note that input/output processor 212 may acquire three-dimensional data and encoded data from external connector 310.

In addition, each operation of three-dimensional data decoding system 210 may be controlled by controller 211 which executes application programs.

FIG. 13 is a conceptual diagram illustrating a configuration example of point cloud data according to the present embodiment. Point cloud data refers to data of a point cloud that indicates a three-dimensional object.

Specifically, a point cloud is constituted of a plurality of points and has position information which indicates a three-dimensional coordinate position of each point and attribute information which indicates an attribute of each point. The position information is also expressed as geometry.

For example, a type of attribute information may be a color, a reflectance, or the like. Attribute information related to one type may be associated with one point, attribute information related to a plurality of different types may be associated with one point, or attribute information having a plurality of values with respect to a same type may be associated with one point.

FIG. 14 is a conceptual diagram illustrating a data file example of the point cloud data according to the present embodiment. The example is an example of a case where items of position information and items of attribute information have a one-to-one correspondence and the example indicates position information and attribute information of N-number of points which constitute the point cloud data. In this example, position information is information indicating a three-dimensional coordinate position by three axes of x, y, and z and attribute information is information indicating a color by RGB. As a representative data file of point cloud data, a PLY file or the like can be used.

FIG. 15 is a conceptual diagram illustrating a configuration example of mesh data according to the present embodiment. Mesh data is data used in CG (computer graphics) or the like and is data of a three-dimensional mesh which represents a three-dimensional shape of an object by a plurality of faces. Each face is also expressed as a polygon and has a polygonal shape such as a triangle or a quadrilateral.

Specifically, in addition to the plurality of points which constitute a point cloud, a three-dimensional mesh is constituted of a plurality of edges and a plurality of faces. Each point is also expressed as a vertex or a position. Each edge corresponds to a line segment which connects two vertexes. Each face corresponds to an area enclosed by three or more edges.

In addition, a three-dimensional mesh has position information indicating three-dimensional coordinate positions of vertexes. The position information is also expressed as vertex information or geometry. Furthermore, a three-dimensional mesh has connection information indicating a relationship among a plurality of vertexes constituting an edge or a face. The connection information is also expressed as connectivity. In addition, a three-dimensional mesh has attribute information indicating an attribute with respect to a vertex, an edge, or a face. The attribute information in a three-dimensional mesh is also expressed as a texture.

For example, attribute information may indicate a color, a reflectance, or a normal vector with respect to a vertex, an edge, or a face. An orientation of a normal vector can express a front and a rear of a face.

An object file or the like may be used as a data file format of mesh data.

FIG. 16 is a conceptual diagram illustrating a data file example of the mesh data according to the present embodiment. In the example, a data file includes pieces of position information G(1) to G(N) and pieces of attribute information A1(1) to A1(N) of N-number of vertexes which constitute a three-dimensional mesh. In addition, in the example, M-number of pieces of attribute information A2(1) to A2(M) are included. An item of attribute information need not correspond one-to-one to a vertex and need not correspond one-to-one to a face. In addition, attribute information need not exist.

Connection information is indicated by a combination of indexes of vertexes. n [1, 3, 4] indicates a face of a triangle constituted of three vertexes n = 1, n = 3, and n = 4. In addition, m [2, 4, 6] indicates that pieces of attribute information m = 2, m = 4, and m = 6 respectively correspond to the three vertexes.

In addition, a substantive content of the attribute information may be described in a separate file. Furthermore, a pointer with respect to the content may be associated with a vertex, a face, or the like. For example, attribute information indicating an image with respect to a face may be stored in a two-dimensional attribute map file. In addition, a file name of the attribute map and a two-dimensional coordinate value in the attribute map may be described in pieces of attribute information A2(1) to A2(M). Methods of designating attribute information with respect to a face are not limited to these methods and any kind of method may be used.

FIG. 17 is a conceptual diagram illustrating a type of three-dimensional data according to the present embodiment. Point cloud data and mesh data may either indicate a static object or a dynamic object. A static object is an object that does not temporally change and a dynamic object is an object that temporally changes. A static object may correspond to three-dimensional data with respect to an arbitrary time point.

For example, point cloud data with respect to an arbitrary time point may be expressed as a PCC frame. In addition, mesh data with respect to an arbitrary time point may be expressed as a mesh frame. Furthermore, a PCC frame and a mesh frame may be simply expressed as a frame.

In addition, an area of an object may be limited to a certain range in a similar manner to ordinary video data or need not be limited in a similar manner to map data. Furthermore, a density of points or faces may be set in various ways. Sparse point cloud data or sparse mesh data may be used or dense point cloud data or dense mesh data may be used.

Next, encoding and decoding of a point cloud or a three-dimensional mesh will be described. A device, processing, or a syntax for encoding and decoding vertex information of a three-dimensional mesh according to the present disclosure may be applied to the encoding and decoding of a point cloud. A device, processing, or a syntax for encoding and decoding a point cloud according to the present disclosure may be applied to the encoding and decoding of vertex information of a three-dimensional mesh.

In addition, a device, processing, or a syntax for encoding and decoding attribute information of a point cloud according to the present disclosure may be applied to the encoding and decoding of connection information or attribute information of a three-dimensional mesh. Furthermore, a device, processing, or a syntax for encoding and decoding connection information or attribute information of a three-dimensional mesh according to the present disclosure may be applied to the encoding and decoding of attribute information of a point cloud.

Furthermore, at least a part of processing may be commonalized between the encoding and decoding of point cloud data and the encoding and decoding of mesh data. Accordingly, sizes of circuits and software programs can be suppressed.

FIG. 18 is a block diagram illustrating a configuration example of three-dimensional data encoder 113 according to the present embodiment. In this example, three-dimensional data encoder 113 includes vertex information encoder 121, attribute information encoder 122, metadata encoder 123, and multiplexer 124. Vertex information encoder 121, attribute information encoder 122, and multiplexer 124 may correspond to vertex information encoder 101, attribute information encoder 103, postprocessor 105, and the like illustrated in FIG. 6.

In addition, in this example, three-dimensional data encoder 113 encodes three-dimensional data according to a geometry-based encoding system. Encoding according to the geometry-based encoding system takes a three-dimensional structure into consideration. Furthermore, in encoding according to the geometry-based encoding system, attribute information is encoded using configuration information obtained during encoding of vertex information.

Specifically, first, vertex information, attribute information, and metadata included in three-dimensional data generated from sensor data are respectively input to vertex information encoder 121, attribute information encoder 122, and metadata encoder 123. In this case, connection information included in three-dimensional data may be handled in a similar manner to attribute information. In addition, in the case of point cloud data, position information may be handled as vertex information.

Vertex information encoder 121 encodes vertex information into compressed vertex information and outputs the compressed vertex information to multiplexer 124 as encoded data. In addition, vertex information encoder 121 generates metadata of the compressed vertex information and outputs the metadata to multiplexer 124. Furthermore, vertex information encoder 121 generates configuration information and outputs the configuration information to attribute information encoder 122.

Attribute information encoder 122 encodes attribute information into compressed attribute information using the configuration information generated by vertex information encoder 121 and outputs the compressed attribute information to multiplexer 124 as encoded data. In addition, attribute information encoder 122 generates metadata of the compressed attribute information and outputs the metadata to multiplexer 124.

Metadata encoder 123 encodes compressible metadata into compressed metadata and outputs the compressed metadata to multiplexer 124 as encoded data. The metadata encoded by metadata encoder 123 may be used to encode vertex information and to encode attribute information.

Multiplexer 124 multiplexes the compressed vertex information, the metadata of the compressed vertex information, the compressed attribute information, the metadata of the compressed attribute information, and the compressed metadata into a bitstream. In addition, multiplexer 124 inputs the bitstream into a system layer.

FIG. 19 is a block diagram illustrating a configuration example of three-dimensional data decoder 213 according to the present embodiment. In this example, three-dimensional data decoder 213 includes vertex information decoder 221, attribute information decoder 222, metadata decoder 223, and demultiplexer 224. Vertex information decoder 221, attribute information decoder 222, and demultiplexer 224 may correspond to vertex information decoder 201, attribute information decoder 203, preprocessor 204, and the like illustrated in FIG. 8.

In addition, in this example, three-dimensional data decoder 213 decodes three-dimensional data according to a geometry-based encoding system. Decoding according to the geometry-based encoding system takes a three-dimensional structure into consideration. Furthermore, in decoding according to the geometry-based encoding system, attribute information is decoded using configuration information obtained during decoding of vertex information.

Specifically, first, a bitstream is input from a system layer into demultiplexer 224. Demultiplexer 224 separates compressed vertex information, metadata of the compressed vertex information, compressed attribute information, metadata of the compressed attribute information, and compressed metadata from the bitstream. The compressed vertex information and the metadata of the compressed vertex information are input to vertex information decoder 221. The compressed attribute information and the metadata of the compressed attribute information are input to attribute information decoder 222. The metadata is input to metadata decoder 223.

Vertex information decoder 221 decodes vertex information from the compressed vertex information using the metadata of the compressed vertex information. In addition, vertex information decoder 221 generates configuration information and outputs the configuration information to attribute information decoder 222. Attribute information decoder 222 decodes attribute information from the compressed attribute information using the configuration information generated by vertex information decoder 221 and the metadata of the compressed attribute information. Metadata decoder 223 decodes metadata from the compressed metadata. The metadata decoded by metadata decoder 223 may be used to decode vertex information and to decode attribute information.

Subsequently, the vertex information, the attribute information, and the metadata are output from three-dimensional data decoder 213 as three-dimensional data. For example, the metadata is metadata of vertex information and attribute information and can be used in an application program.

FIG. 20 is a block diagram illustrating another configuration example of three-dimensional data encoder 113 according to the present embodiment. In this example, three-dimensional data encoder 113 includes vertex image generator 131, attribute image generator 132, metadata generator 133, video encoder 134, metadata encoder 123, and multiplexer 124. Vertex image generator 131, attribute image generator 132, and video encoder 134 may correspond to vertex information encoder 101, attribute information encoder 103, and the like illustrated in FIG. 6.

In addition, in this example, three-dimensional data encoder 113 encodes three-dimensional data according to a video-based encoding system. In encoding according to the video-based encoding system, a plurality of two-dimensional images are generated from three-dimensional data and the plurality of two-dimensional images are encoded according to a video encoding system. In this case, the video encoding system may be HEVC (high efficiency video coding), VVC (versatile video coding), or the like.

Specifically, first, vertex information and attribute information included in three-dimensional data generated from sensor data are input to metadata generator 133. In addition, the vertex information and the attribute information are respectively input to vertex image generator 131 and attribute image generator 132. Furthermore, the metadata included in the three-dimensional data is input to metadata encoder 123. In this case, connection information included in three-dimensional data may be handled in a similar manner to attribute information. In addition, in the case of point cloud data, position information may be handled as vertex information.

Metadata generator 133 generates map information of a plurality of two-dimensional images from the vertex information and the attribute information. In addition, metadata generator 133 inputs the map information into vertex image generator 131, attribute image generator 132, and metadata encoder 123.

Vertex image generator 131 generates a vertex image based on the vertex information and the map information and inputs the vertex image into video encoder 134. Attribute image generator 132 generates an attribute image based on the attribute information and the map information and inputs the attribute image into video encoder 134.

Video encoder 134 respectively encodes the vertex image and the attribute image into compressed vertex information and compressed attribute information according to the video encoding system and outputs the compressed vertex information and the compressed attribute information to multiplexer 124 as encoded data. In addition, video encoder 134 generates metadata of the compressed vertex information and metadata of the compressed attribute information and outputs the pieces of metadata to multiplexer 124.

Metadata encoder 123 encodes compressible metadata into compressed metadata and outputs the compressed metadata to multiplexer 124 as encoded data. Compressible metadata includes map information. In addition, the metadata encoded by metadata encoder 123 may be used to encode vertex information and to encode attribute information.

Multiplexer 124 multiplexes the compressed vertex information, the metadata of the compressed vertex information, the compressed attribute information, the metadata of the compressed attribute information, and the compressed metadata into a bitstream. In addition, multiplexer 124 inputs the bitstream into a system layer.

FIG. 21 is a block diagram illustrating another configuration example of three-dimensional data decoder 213 according to the present embodiment. In this example, three-dimensional data decoder 213 includes vertex information generator 231, attribute information generator 232, video decoder 234, metadata decoder 223, and demultiplexer 224. Vertex information generator 231, attribute information generator 232, and video decoder 234 may correspond to vertex information decoder 201, attribute information decoder 203, and the like illustrated in FIG. 8.

In addition, in this example, three-dimensional data decoder 213 decodes three-dimensional data according to a video-based encoding system. In decoding according to the video-based encoding system, a plurality of two-dimensional images are decoded according to a video encoding system and three-dimensional data is generated from the plurality of two-dimensional images. In this case, the video encoding system may be HEVC (high efficiency video coding), VVC (versatile video coding), or the like.

Specifically, first, a bitstream is input from a system layer into demultiplexer 224. Demultiplexer 224 separates compressed vertex information, metadata of the compressed vertex information, compressed attribute information, metadata of the compressed attribute information, and compressed metadata from the bitstream. The compressed vertex information, the metadata of the compressed vertex information, the compressed attribute information, and the metadata of the compressed attribute information are input to video decoder 234. The compressed metadata is input to metadata decoder 223.

Video decoder 234 decodes a vertex image according to the video encoding system. In doing so, video decoder 234 decodes the vertex image from the compressed vertex information using the metadata of the compressed vertex information. In addition, video decoder 234 inputs the vertex image into vertex information generator 231. Furthermore, video decoder 234 decodes an attribute image according to the video encoding system. In doing so, video decoder 234 decodes the attribute image from the compressed attribute information using the metadata of the compressed attribute information. In addition, video decoder 234 inputs the attribute image into attribute information generator 232.

Metadata decoder 223 decodes metadata from the compressed metadata. The metadata decoded by metadata decoder 223 includes map information to be used to generate vertex information and to generate attribute information. In addition, the metadata decoded by metadata decoder 223 may be used to decode the vertex image and to decode the attribute image.

Vertex information generator 231 reproduces vertex information from the vertex image according to the map information included in the metadata decoded by metadata decoder 223. Attribute information generator 232 reproduces attribute information from the attribute image according to the map information included in the metadata decoded by metadata decoder 223.

Subsequently, the vertex information, the attribute information, and the metadata are output from three-dimensional data decoder 213 as three-dimensional data. For example, the metadata is metadata of vertex information and attribute information and can be used in an application program.

FIG. 22 is a conceptual diagram illustrating a specific example of encoding processing according to the present embodiment. FIG. 22 illustrates three-dimensional data encoder 113 and description encoder 148. In this example, three-dimensional data encoder 113 includes two-dimensional data encoder 141 and mesh data encoder 142. Two-dimensional data encoder 141 includes texture encoder 143. Mesh data encoder 142 includes vertex information encoder 144 and connection information encoder 145.

Vertex information encoder 144, connection information encoder 145, and texture encoder 143 may correspond to vertex information encoder 101, connection information encoder 102, attribute information encoder 103, and the like illustrated in FIG. 6.

For example, two-dimensional data encoder 141 operates as texture encoder 143 and generates a texture file by encoding a texture corresponding to attribute information as two-dimensional data according to an image encoding system or a video encoding system.

In addition, mesh data encoder 142 operates as vertex information encoder 144 and connection information encoder 145 and generates a mesh file by encoding vertex information and connection information. Mesh data encoder 142 may further encode mapping information with respect to a texture. The encoded mapping information may be included in a mesh file.

In addition, description encoder 148 generates a description file by encoding a description corresponding to metadata such as text data. Description encoder 148 may encode a description in the system layer. For example, description encoder 148 may be included in system multiplexer 114 illustrated in FIG. 12.

Due to the operation described above, a bitstream including a texture file, a mesh file, and a description file is generated. The files may be multiplexed in the bitstream in a file format such as gITF (graphics language transmission format) or USD (universal scene description).

Note that three-dimensional data encoder 113 may include two mesh data encoders as mesh data encoder 142. For example, one mesh data encoder encodes vertex information and connection information of a static three-dimensional mesh and the other mesh data encoder encodes vertex information and connection information of a dynamic three-dimensional mesh.

In addition, two mesh files may be included in the bitstream so as to correspond to the three-dimensional meshes. For example, one mesh file corresponds to the static three-dimensional mesh and the other mesh file corresponds to the dynamic three-dimensional mesh.

Furthermore, the static three-dimensional mesh may be an intra-frame three-dimensional mesh which is encoded using intra-prediction and the dynamic three-dimensional mesh may be an inter-frame three-dimensional mesh which is encoded using inter-prediction. In addition, as information of the dynamic three-dimensional mesh, difference information between vertex information or connection information of the intra-frame three-dimensional mesh and vertex information or connection information of the inter-frame three-dimensional mesh may be used.

FIG. 23 is a conceptual diagram illustrating a specific example of decoding processing according to the present embodiment. FIG. 23 illustrates three-dimensional data decoder 213, description decoder 248, and presenter 247. In this example, three-dimensional data decoder 213 includes two-dimensional data decoder 241, mesh data decoder 242, and mesh reconstructor 246. Two-dimensional data decoder 241 includes texture decoder 243. Mesh data decoder 242 includes vertex information decoder 244 and connection information decoder 245.

Vertex information decoder 244, connection information decoder 245, texture decoder 243, and mesh reconstructor 246 may correspond to vertex information decoder 201, connection information decoder 202, attribute information decoder 203, postprocessor 205, and the like illustrated in FIG. 8. Presenter 247 may correspond to presenter 215 and the like illustrated in FIG. 12.

For example, two-dimensional data decoder 241 operates as texture decoder 243 and decodes a texture corresponding to attribute information from a texture file as two-dimensional data according to an image encoding system or a video encoding system.

In addition, mesh data decoder 242 operates as vertex information decoder 244 and connection information decoder 245 and decodes vertex information and connection information from a mesh file. Mesh data decoder 242 may further decode mapping information with respect to a texture from the mesh file.

Furthermore, description decoder 248 decodes a description corresponding to metadata such as text data from a description file. Description decoder 248 may decode a description in the system layer. For example, description decoder 248 may be included in system demultiplexer 214 illustrated in FIG. 12.

Mesh reconstructor 246 reconstructs a three-dimensional mesh from vertex information, connection information, and a texture according to a description. Presenter 247 renders and outputs the three-dimensional mesh according to the description.

Due to the operation described above, a three-dimensional mesh is reconstructed and output from a bitstream including a texture file, a mesh file, and a description file.

Note that three-dimensional data decoder 213 may include two mesh data decoders as mesh data decoder 242. For example, one mesh data decoder decodes vertex information and connection information of a static three-dimensional mesh and the other mesh data decoder decodes vertex information and connection information of a dynamic three-dimensional mesh.

In addition, two mesh files may be included in the bitstream so as to correspond to the three-dimensional meshes. For example, one mesh file corresponds to the static three-dimensional mesh and the other mesh file corresponds to the dynamic three-dimensional mesh.

Furthermore, the static three-dimensional mesh may be an intra-frame three-dimensional mesh which is encoded using intra-prediction and the dynamic three-dimensional mesh may be an inter-frame three-dimensional mesh which is encoded using inter-prediction. In addition, as information of the dynamic three-dimensional mesh, difference information between vertex information or connection information of the intra-frame three-dimensional mesh and vertex information or connection information of the inter-frame three-dimensional mesh may be used.

An encoding system of a dynamic three-dimensional mesh may be called DMC (dynamic mesh coding). In addition, a video-based encoding system of a dynamic three-dimensional mesh may be called VDMC (video-based dynamic mesh coding).

An encoding system of a point cloud may be called PCC (point cloud compression). A video-based encoding system of a point cloud may be called V-PCC (video-based point cloud compression). In addition, a geometry-based encoding system of a point cloud may be called G-PCC (geometry-based point cloud compression).

### <Implementation example>

FIG. 24 is a block diagram illustrating an implementation example of encoding device 100 according to the present embodiment. Encoding device 100 includes circuit 151 and memory 152. For example, a plurality of constituent elements of encoding device 100 illustrated in FIG. 5 and the like are implemented by circuit 151 and memory 152 illustrated in FIG. 24.

Circuit 151 is a circuit which performs information processing and which is capable of accessing memory 152. For example, circuit 151 is a dedicated or general-purpose electric circuit which encodes a three-dimensional mesh. Circuit 151 may be a processor such as a CPU. Alternatively, circuit 151 may be a set of a plurality of electric circuits.

Memory 152 is a dedicated or general-purpose memory that stores information used by circuit 151 to encode a three-dimensional mesh. Memory 152 may be an electric circuit and may be connected to circuit 151. In addition, memory 152 may be included in circuit 151. Alternatively, memory 152 may be a set of a plurality of electric circuits. Furthermore, memory 152 may be a magnetic disk, an optical disk, or the like or may be expressed as a storage, a recording medium, or the like. In addition, memory 152 may be a non-volatile memory or a volatile memory.

For example, memory 152 may store a three-dimensional mesh or a bitstream. In addition, memory 152 may store a program used by circuit 151 to encode a three-dimensional mesh.

Note that in encoding device 100, all of the plurality of constituent elements illustrated in FIG. 5 and the like need not be implemented and all of the plurality of processing steps described herein need not be performed. A part of the plurality of constituent elements illustrated in FIG. 5 and the like may be included in another device and a part of the plurality of processing steps described herein may be executed by another device. In addition, a plurality of constituent elements according to the present disclosure may be optionally combined and implemented or a plurality of processing steps according to the present disclosure may be optionally combined and executed in encoding device 100.

FIG. 25 is a block diagram illustrating an implementation example of decoding device 200 according to the present embodiment. Decoding device 200 includes circuit 251 and memory 252. For example, a plurality of constituent elements of decoding device 200 illustrated in FIG. 7 and the like are implemented by circuit 251 and memory 252 illustrated in FIG. 25.

Circuit 251 is a circuit which performs information processing and which is capable of accessing memory 252. For example, circuit 251 is a dedicated or general-purpose electric circuit which decodes a three-dimensional mesh. Circuit 251 may be a processor such as a CPU. Alternatively, circuit 251 may be a set of a plurality of electric circuits.

Memory 252 is a dedicated or general-purpose memory that stores information used by circuit 251 to decode a three-dimensional mesh. Memory 252 may be an electric circuit and may be connected to circuit 251. In addition, memory 252 may be included in circuit 251. Alternatively, memory 252 may be a set of a plurality of electric circuits. Furthermore, memory 252 may be a magnetic disk, an optical disk, or the like or may be expressed as a storage, a recording medium, or the like. In addition, memory 252 may be a non-volatile memory or a volatile memory.

For example, memory 252 may store a three-dimensional mesh or a bitstream. In addition, memory 252 may store a program used by circuit 251 to decode a three-dimensional mesh.

Note that in decoding device 200, all of the plurality of constituent elements illustrated in FIG. 7 and the like need not be implemented and all of the plurality of processing steps described herein need not be performed. A part of the plurality of constituent elements illustrated in FIG. 7 and the like may be included in another device and a part of the plurality of processing steps described herein may be executed by another device. In addition, a plurality of constituent elements according to the present disclosure may be optionally combined and implemented or a plurality of processing steps according to the present disclosure may be optionally combined and executed in decoding device 200.

An encoding method and a decoding method including steps performed by each constituent element of encoding device 100 and decoding device 200 according to the present disclosure may be executed by any device or system. For example, a part of or all of the encoding method and the decoding method may be executed by a computer including a processor, a memory, an input/output circuit, and the like. In doing so, the encoding method and the decoding method may be executed by having the computer execute a program that enables the computer to execute the encoding method and the decoding method.

In addition, a program or a bitstream may be recorded on a non-transitory computer-readable recording medium such as a CD-ROM.

An example of a program may be a bitstream. For example, a bitstream including an encoded three-dimensional mesh includes a syntax element that enables decoding device 200 to decode the three-dimensional mesh. In addition, the bitstream causes decoding device 200 to decode the three-dimensional mesh according to the syntax element included in the bitstream. Therefore, a bitstream can perform a similar role to a program.

The bitstream described above may be an encoded bitstream including an encoded three-dimensional mesh or a multiplexed bitstream including an encoded three-dimensional mesh and other information.

In addition, each constituent element of encoding device 100 and decoding device 200 may be constituted of dedicated hardware, general-purpose hardware which executes the program or the like described above, or a combination thereof. Furthermore, the general-purpose hardware may be constituted of a memory on which a program is recorded, a general-purpose processor which reads the program from the memory and executes the program, and the like. In this case, the memory may be a semiconductor memory, a hard disk, or the like and the general-purpose processor may be a CPU or the like.

Furthermore, the dedicated hardware may be constituted of a memory, a dedicated processor, and the like. For example, the dedicated processor may execute the encoding method and the decoding method by referring to a memory for recording data.

In addition, as described above, the respective constituent elements of encoding device 100 and decoding device 200 may be electric circuits. The electric circuits may constitute one electric circuit as a whole or may be respectively different electric circuits. Furthermore, the electric circuits may correspond to dedicated hardware or to general-purpose hardware which executes the program or the like described above. Moreover, encoding device 100 and decoding device 200 may be implemented as integrated circuits.

In addition, encoding device 100 may be a transmitting device which transmits a three-dimensional mesh. Decoding device 200 may be a receiving device which receives a three-dimensional mesh.

### <Encoding and Decoding of Displacement Vector>

In the following, an encoding device, a decoding device, an encoding method, and a decoding method that reduce the complexity of a three-dimensional mesh coding tool according to an aspect of the present disclosure will be specifically described. The present disclosure can be used for encoding and decoding of any multimedia data associated with a three-dimensional digital representation of any object or surface in a computer graphics application. In particular, according to the present disclosure, a static or dynamic three-dimensional model represented by a triangular mesh can be encoded.

Conventionally, a typical three-dimensional model digitally represents an object. Therefore, the user can search the three-dimensional model through zooming, panning, and rotation in all of the three dimensions while temporarily rendering the three-dimensional model. One method of constructing such a representation is to construct a three-dimensional mesh with triangles. The three-dimensional model stores positions of vertexes of triangles, connectivity of the triangles, and attributes associated with the triangles (such as normals and UV patches). A very large storage area is needed to store all of these items of information in an uncompressed manner, and a very high bandwidth is needed for transmission of all of these items of information. Triangles forming a mesh, in particular, those in temporal or spatial proximity to each other, often have repetitive patterns and similar attributes. Such a repetition can be used to formulate efficient encoding method and decoding method for storage and transmission.

FIG. 26 is a diagram illustrating a configuration of an encoding/decoding system according to the embodiment.

The encoding/decoding system illustrated in FIG. 26 acquires a three-dimensional mesh frame (input three-dimensional mesh frame) that includes vertex geometry coordinates, texture coordinates, and connectivity data. The encoding/decoding system includes encoding device 100 and decoding device 200.

Encoding device 100 encodes all associated information to a bitstream (compressed bitstream). The compressed bitstream may be formed by a plurality of bitstreams. The bitstream is output to decoding device 200 through a transmission path.

Decoding device 200 decodes the bitstream and generates (reconstructs) a three-dimensional mesh frame from the decoded vertex geometry coordinates, texture coordinates, and connectivity data.

FIG. 27 is a diagram illustrating an example of a configuration of encoding device 100 according to the embodiment.

Encoding device 100 includes volumetric capturer 511, projector 512, base mesh encoder 513, displacement encoder 514, attribute encoder 515, and encoder 516 of another type.

Volumetric capturer 511 captures a content and outputs the captured content to projector 512.

Projector 512 projects the content onto a three-dimensional mesh frame. The three-dimensional mesh frame includes vertex geometry coordinates, texture coordinates, and connectivity data. That is, projector 512 generates vertex geometry coordinates, texture coordinates, and connectivity data based on the content. Projector 512 outputs the vertex geometry coordinates, the texture coordinates, and the connectivity data to base mesh encoder 513, displacement encoder 514, attribute encoder 515, and encoder 516 of another type, which is an encoder different from the encoders described earlier. Note that encoding device 100 may or may not include encoder 516 of another type. Each encoder encodes data to a bitstream. In other words, each encoder generates a bitstream including encoded data. The generated bitstream is transmitted to decoding device 200.

FIG. 28 is a diagram illustrating another example of the configuration of encoding device 100 according to the embodiment.

Encoding device 100 includes preprocessor 521 and encoding processor 522.

Preprocessor 521 acquires a three-dimensional mesh frame. Preprocessor 521 processes the acquired three-dimensional mesh frame, thereby extracting a base mesh, displacement information, and an attribute map. In addition, preprocessor 521 outputs the extracted information to encoding processor 522. An example of the displacement information is a displacement vector.

Encoding processor 522 encodes and multiplexes the information extracted by preprocessor 521, for example. Specifically, encoding processor 522 separately encodes the base mesh, the displacement information, and the attribute map and combines the encoded information (for example, multiplexes the encoded information) to generate a bitstream. The generated bitstream is transmitted to decoding device 200.

FIG. 29 is a diagram illustrating an example of a configuration of decoding device 200 according to the embodiment.

Decoding device 200 includes base mesh decoder 613, displacement decoder 614, attribute decoder 615, and decoder 616 of another type.

A bitstream sent from encoding device 100 is output to base mesh decoder 613, displacement decoder 614, attribute decoder 615, and decoder 616 of another type, which is a decoder different from the decoders described earlier. Note that decoding device 200 may or may not include decoder 616 of another type. Each decoder decodes a bitstream to generate decoded data including vertex geometry coordinates, texture coordinates, and connectivity. The decoded data is output to three-dimensional reconstructor 617.

Three-dimensional reconstructor 617 generates (reconstructs) the three-dimensional mesh frame based on the decoded data including vertex geometry coordinates, texture coordinates, and connectivity.

FIG. 30 is a diagram illustrating another example of the configuration of decoding device 200 according to the embodiment.

Decoding device 200 includes decoding processor 622 and postprocessor 623.

Decoding processor 622 acquires a bitstream. Furthermore, decoding processor 622 performs demultiplexing and decoding of an output bitstream. Specifically, decoding processor 622 first separates an encoded base mesh, encoded displacement information, and an encoded attribute map from a compressed bitstream, and separately decodes them. Decoding processor 622 then outputs the decoded information to postprocessor 623. An example of the displacement information is a displacement vector.

Postprocessor 623 processes the base mesh according to the displacement information and the attribute map to generate the three-dimensional mesh frame.

FIG. 31 is a diagram illustrating another example of the configuration of decoding device 200 according to the embodiment. Specifically, FIG. 31 illustrates an example of main components of a vertex geometry coordinate decoder provided in decoding device 200.

The vertex geometry coordinate decoder included in decoding device 200 includes frame header decoder 641, vertex geometry coordinate predictor 642, vertex geometry coordinate difference decoder 643, and reconstruction module 644.

Frame header decoder 641 decodes a header of a bitstream and determines whether to perform the intra-decoding or the inter-decoding on frame data included in the bitstream.

When the inter-decoding is selected, the frame data in the bitstream is output to vertex geometry coordinate predictor 642, which outputs prediction information.

Vertex geometry coordinate predictor 642 generates prediction information based on the frame data in the bitstream, and outputs the generated prediction information to reconstruction module 644. An example of the prediction information is information about motion prediction (a motion vector, for example).

Reconstruction module 644 outputs vertex geometry coordinates using vertex geometry coordinate obtained from a previously decoded frame (three-dimensional mesh frame) and the prediction information output from vertex geometry coordinate predictor 642.

On the other hand, when the intra-decoding is selected, the frame data in the bitstream is output to vertex geometry coordinate difference decoder 643. Vertex geometry coordinate difference decoder 643 decodes the frame data encoded as a difference between vertex geometry coordinates in the frame to generate vertex geometry coordinates.

For example, only one of the two sets of vertex geometry coordinates output from reconstruction module 644 and vertex geometry coordinate difference decoder 643 is used for generation of the three-dimensional mesh frame.

FIG. 32 is a conceptual diagram illustrating an example of subdivision according to the embodiment. Specifically, FIG. 32 is a diagram for describing a general procedure for deriving a new vertex from existing vertexes through subdivision.

The base mesh (a three-dimensional mesh frame serving as a base) illustrated in FIG. 32 includes vertexes A, B, and C and connectivity thereof. In first subdivision, vertexes D, E, and F and connectivity of these vertexes are determined. The vertexes D, E, and F and the connectivity thereof are derived by adding new vertexes between the already connected vertexes A and B, B and C and C and A. The added new vertexes and the connectivity thereof form a level of detail (LoD) 1 along with the existing vertexes and connectivity. In second subdivision, in a procedure similar to this procedure, vertexes G, H, I, J, K, L, M, N, and O and connectivity thereof are derived, and these vertexes and connectivity form LoD 2.

FIG. 33 is a diagram illustrating another example of the configuration of decoding device 200 according to the embodiment. Specifically, FIG. 33 illustrates an example of main components of a displacement decoder included in decoding device 200. For example, displacement decoder 614 illustrated in FIG. 29 includes the components illustrated in FIG. 33.

The displacement decoder included in decoding device 200 includes video decoder 631, image decompressor 632, inverse quantizer 633, and inverse wavelet transformer 634, for example.

Video decoder 631 acquires a bitstream. For example, video decoder 631 assumes that the bitstream is an image having two items of chrominance information and one item of luminance information. Video decoder 631 decodes data included in the bitstream using a predetermined video decoding method. The decoded data is output to image decompressor 632.

Image decompressor 632 extracts a wavelet coefficient associated with each vertex from the decoded (decompressed) data in image form. Image decompressor 632 outputs the extracted wavelet coefficient to inverse quantizer 633.

Inverse quantizer 633 performs inverse quantization of the quantized wavelet coefficients for three components associated with each vertex. Inverse quantizer 633 outputs the result of the inverse quantization to inverse wavelet transformer 634.

Inverse wavelet transformer 634 performs inverse transformation (inverse wavelet transformation) of the result of the inverse quantization output from inverse quantizer 633. In this way, inverse wavelet transformer 634 obtains final decoded displacement information. Inverse wavelet transformer 634 outputs the decoded displacement information to three-dimensional reconstructor 617 or the like, for example. An example of the displacement information is a displacement vector. The decoded displacement information is used for displacement of a vertex in the three-dimensional mesh frame.

Here, many conventional high-end specialized devices support the YUV444 format. By using the YUV444 format for encoding, encoding of three components included in all three-dimensional displacement vectors is supported. However, a bitstream generated using the YUV444 format has a very large size (data amount), and commonly used hardware takes a long time to decode the bitstream. In addition, hardware that does not support the YUV444 format may be unable to decode the bitstream.

Besides, another possible approach is encoding using the YUV400 format. In this encoding, for example, one of three components included in all three-dimensional displacement vectors (for example, only a component in a normal direction in a local coordinate system) is encoded and output as a luminance component. Therefore, for example, in this encoding, two components of the three components (for example, a component in a tangential direction (a tangential component) and a component in a bi-tangential direction (a bi-tangential component) in the local coordinate system) are discarded without being encoded. Therefore, in this encoding, the size of the bitstream can be reduced. However, in many cases, a three-dimensional mesh frame reconstructed based on the bitstream generated by this encoding is distorted and may have a low quality. In addition, hardware that does not support the YUV400 format may be unable to decode the bitstream.

For this reason, the method described above has a problem that it is difficult to make an appropriate tradeoff between the processing time (runtime) of the three-dimensional mesh frame, the quality of the reconstructed three-dimensional mesh frame, and the size of the bitstream.

Here, according to the present disclosure, the YUV420 format, in which the chrominance components (U, V) are a quarter the size of the luminance component (Y), is used. The YUV420 format is more commonly used than other formats, such as the YUV444 and the YUV400, and is supported by more hardware. In addition, by using the YUV420 format, an appropriate tradeoff may be able to be made between the processing time of the three-dimensional mesh frame, the quality of the reconstructed three-dimensional mesh frame, and the size of the bitstream. Therefore, more excellent encoding may be able to be achieved. However, when the YUV420 format is used, a lost value of the displacement vector needs to be compensated for.

FIG. 34 is a diagram for describing transformation of components of displacement vectors in a local coordinate system in the case where the YUV420 format is used. Specifically, FIG. 34 is a diagram for describing a problem that the YUV420 format cannot compensate for a component of a displacement vector in a local coordinate system.

In FIG. 34, four displacement vectors each having three components are considered. The components of the displacement vectors illustrated in FIG. 34 correspond to three axes in the local coordinate system, for example. The three axes in the local coordinate system are an axis in a normal direction (referred to simply as an N axis, hereinafter), an axis in a tangential direction (referred to simply as a T axis, hereinafter), and an axis in a bi-tangential direction (referred to simply as a B axis, hereinafter). By using such a local coordinate system determined based on a normal vector at each point, projections and depressions of a surface, which are important to represent the shape of a mesh, can be represented by an N-axis component. Note that the components in the coordinate system represented by the N axis, the T axis, and the B axis may be generated by transforming, based on the normal vector, the components of a displacement vector represented by components in another coordinate system used for representation of positions of vertexes of a mesh, for example. The other coordinate system used for representation of positions of vertexes of a mesh described above may be referred to as a global coordinate system or may be a coordinate system used for defining the normal vector. Furthermore, the components of the displacement vector in the coordinate system represented by the N axis, the T axis, and the B axis may be directly derived from positions of vertexes of a base mesh or positions of vertexes derived using a base mesh, a mesh to be encoded, and a normal vector. Furthermore, the three components corresponding to the displacement vector (referred to as component values, hereinafter) are a component corresponding to the N axis (referred to as an N component, hereinafter), a component corresponding to the T axis (referred to as a T component, hereinafter), and a component corresponding to the B axis (referred to as a B component, hereinafter). Considering encoding of the components (specifically, values of the components) of four displacement vectors using the YUV420 format, twelve components are encoded in total. However, the YUV420 format cannot encode the twelve components in a one-to-one correspondence, and the twelve components need to be reduced to up to six items of information.

In order to decode such encoded data, components (lost values) of the displacement vectors that are not encoded in a one-to-one correspondence in the YUV420 format need to be compensated for in decoding. For example, suppose that twelve components are transformed into six samples using the YUV420 format. For example, as illustrated in FIG. 34, suppose that a to d, which are values of samples, correspond to the N components of the four displacement vectors. Then, decoding device 200 can calculates the N components of the four displacement vectors from a to d. However, decoding device 200 cannot calculate the T components and the B components of the four displacement vectors from e and f, which are values of the remaining two samples, unless the components have the same value. Thus, in the present application, in decoding, data decoded from the bitstream is used to determine the components of a displacement vector represented in the global coordinate system or local coordinate system, for example.

Specifically, in the present application, to solve the problem described above, four displacement vectors are transformed into six samples. The samples are generated according to dominant characteristics of the components of the displacement vectors. When a displacement vector is represented in a local coordinate system, typically, the component on the N axis is higher than the components on the T axis and the B axis. For example, the T component and the B component each have a value close to 0. The displacement vector indicates a displacement of the position of a vertex, for example. For example, a displacement in the normal direction (N-axis direction) of the face formed by the lines connecting the vertexes illustrated in FIG. 32 is represented by the N component of the displacement vector. The position of a vertex is more likely to be displaced in the N-axis direction of the face than in the T-axis direction and the B-axis direction. Thus, for example, four samples are assigned to represent the component in the N-axis direction, and the remaining two samples are assigned to represent the component in the T-axis direction and the component in the B-axis direction.

Not that this approach can be applied to a case where the displacement vector is represented in other coordinate systems than the local coordinate system, such as the global coordinate system.

According to such an approach, the main coding profile, which can be widely used for digital devices, such as lap-top computers, cellular phones, and tablet computers, can be used. According to such an approach, in addition, the size of the bitstream may be able to be reduced. According to such an approach, in addition, the influence on the subjective and objective qualities of the reconstructed three-dimensional mesh frame may be able to be reduced.

In the following, details of the present disclosure will be further specifically described. Note that it will be apparent to those skilled in the art that the embodiments described can be implemented in any combination in order to further enhance the advantages of the present disclosure.

### <Encoding of Displacement Vector>

FIG. 35 is a flowchart illustrating encoding processing (mesh encoding processing) according to the embodiment. For example, encoding device 100 performs each step illustrated in FIG. 35.

First, encoding device 100 derives four displacement vectors (in other words, four sets of displacement vectors) (S101). Here, four displacement vectors each include three components. Each component of the displacement vector represents the difference, on one of axes of a second coordinate system, between a first vertex in a first three-dimensional mesh frame and a second vertex in a second three-dimensional mesh frame. The first three-dimensional mesh frame is a three-dimensional mesh frame after correction of positions of vertexes with the displacement vectors, for example. The second three-dimensional mesh frame is a three-dimensional mesh frame before correction of positions of vertexes with the displacement vectors, for example. That is, the first three-dimensional mesh frame is the second three-dimensional mesh frame corrected with the displacement vectors, for example. In addition, the first vertex is a vertex after correction of the position with the displacement vectors, for example. The second vertex is a vertex before correction of the position with the displacement vectors, for example. That is, the first vertex is the second vertex corrected with the displacement vectors, for example.

Note that the four displacement vectors are not particularly limited and can be arbitrarily determined. The displacement vectors may be calculated from a plurality of three-dimensional mesh frames or may be included in a three-dimensional mesh frame to which information indicating the displacement vectors is input.

Encoding device 100 then transforms the four displacement vectors into six samples (S102). Specifically, encoding device 100 transforms a total of twelve components included in four displacement vectors into six samples. In other words, encoding device 100 reduces the number of items of information from twelve to six. Here, four samples represent differences on a first axis of the three axes of a first coordinate system, and the other two samples represent differences on other axes than the first axis of the first coordinate system. The first coordinate system and the second coordinate system can be any coordinate system. Furthermore, the first coordinate system and the second coordinate system may be the same coordinate system or different coordinate systems. The first coordinate system and the second coordinate system are a local coordinate system or a global coordinate system, for example. In the case of the local coordinate system, the first axis is the N axis, for example. Of course, the first axis may be the T axis or the B axis.

Encoding device 100 then encodes the six samples to a bitstream (S103). In other words, encoding device 100 generates a bitstream including the six samples. Encoding device 100 transmits the generated bitstream to decoding device 200, for example.

For example, in step S101, the four sets of displacement vectors are derived between the first mesh frame and the second mesh frame. Each set of displacement vectors has three components. The displacement vector represents the difference between the first vertex in the first three-dimensional mesh frame and the second vertex in the second three-dimensional mesh frame.

Furthermore, in step S102, for example, the four displacement vectors are transformed into six samples by directly copying the components of the displacement vectors. That is, for example, the components (component values) of the displacement vectors constitute the samples (sample values). Note that encoding device 100 may take, for samples, values obtained by quantization or wavelet transformation of the components of the displacement vectors. Taking the components of the displacement vectors for samples without change or taking, for samples, the components of the displacement vectors subjected to quantization or transformation, such as wavelet transformation, is referred to simply as transforming the components into samples (or sampling). Similarly, taking the samples for the components of the displacement vectors without change or taking the samples subjected to inverse quantization or transformation (inverse transformation), such as inverse wavelet transformation for the components of the displacement vectors is referred to simply as transforming (inverse-transforming) samples into components.

Furthermore, in step S103, for example, the six samples are encoded to a bitstream using a video codec (video encoding standard). In other words, encoding device 100 encodes the six samples according to a video encoding standard. Note that any codec can be used for encoding the samples to a bitstream. For example, the video encoding standard may be an existing video encoding standard, such as high efficiency video codec (HEVC), versatile video coding (VVC), or any customized arithmetic encoding.

Furthermore, as described above, the displacement vector is represented using the N axis, the T axis, and the B axis (in a local coordinate system).

Note that the N axis, the T axis, and the B axis may be replaced with an x axis, a y axis, and a z axis (of a global coordinate system) or another three-axis coordinate system. For example, an axis that corresponds to a more dominant component than the components that corresponds the other two axes (a component having a greater value than the other components, for example) is used as the first axis described above. Alternatively, for example, the samples may be determined based on two axes that correspond to more dominant components than the component that corresponds to the other axis. A specific numeric value adopted as the dominant value can be arbitrarily determined.

FIG. 36 is a diagram for describing components of displacement vectors and samples according to the embodiment. Note that N1, N2, N3, and N4 denote components corresponding to the N-axis direction of four displacement vectors. In addition, T1, T2, T3, and T4 denote components corresponding to the T-axis direction of the four displacement vectors. B1, B2, B3, and B4 denote components on the B-axis of the four displacement vectors. The N axis, the T axis, and the B axis are an example of the first axis, a second axis, and a third axis.

As illustrated in FIG. 36, the components on the N axis, the T axis, and the B axis are associated with each other to form a vector as described below. Values of N1, T1, and B1 are associated with each other to form a vector (first displacement vector). Values of N2, T2, and B2 are associated with each other to form a vector (second displacement vector). Values of N3, T3, and B3 are associated with each other to form a vector (third displacement vector). Values of N4, T4, and B4 are associated with each other to form a vector (fourth displacement vector). That is, provided that each vector is expressed as (N component, T component, B component), the first displacement vector = (N1, T1, B1), the second displacement vector = (N2, T2, B2), the third displacement vector = (N3, T3, B3), and the fourth displacement vector = (N4, T4, B4). Using these components, encoding device 100 determines a sample (a first sample) having a value of a, a sample (a second sample) having a value of b, a sample (a third sample) having a value of c, and a sample (a fourth sample) having a value of d that correspond to Y (a chrominance component), a sample (a fifth sample) having a value of e that corresponds to U (a chrominance component), and a sample (sixth sample) having a value of f that corresponds to V (a chrominance component). Note that the samples that correspond to Y (the first to fourth samples in this example) are referred to also as Y samples. Furthermore, the sample that corresponds to U (the fifth sample in this example) is referred to also as a U sample. Furthermore, the sample that corresponds to V (the sixth sample in this example) is referred to also as a V sample.

Next, correspondences between components of and samples (that is, positions of samples transformed from components) that allow decoding device 200 to determine each component of a displacement vector when encoding device 100 uses the YUV420 format in step S102 will be described. Specifically, specific examples of samples transformed from components will be described.

Note that in each example described below, at least any of the components of four displacement vectors each having three components (the N component, the T component, and the B component) is transformed into six samples. In addition, the N components of the four displacement vectors are transformed into the first to fourth samples in a one-to-one correspondence. For example, encoding device 100 transforms N1 into the first sample, N2 into the second sample, N3 into the third sample, and N4 into the fourth sample. In addition, in each example described below, e and f are values determined based on any value of the T components and the B components of the four displacement vectors. In addition, in each example described below, it is supposed for the sake of illustration that the values of N1, N2, N3, and N4 are a, b, c, and d, respectively (N1 = a, N2 = b, N3 = c, N4 = d).

FIG. 37 is a diagram illustrating a first example of the correspondence between the components of the displacement vectors and the samples according to the embodiment. Specifically, FIG. 37 illustrates an example in which the fifth sample (U sample) and the sixth sample (V sample) are associated with the same sample among the four samples (Y samples) corresponding to the N axis. The same sample can be any sample.

This example is advantageous when one displacement vector among the four displacement vectors includes a more dominant (important) component than the other displacement vectors. In this example, the components of the one displacement vector are encoded using the fifth sample and the sixth sample. In this case, the one displacement vector is encoded using three samples. For each of the remaining three displacement vectors, only one component thereof is encoded using one sample.

In this example, for the fifth sample (U sample) and the sixth sample (V sample), components of the same vector on different axes are adopted. More specifically, in this example, T1 = e, and B1 = f. That is, in this example, encoding device 100 transforms T1 (= e) into the fifth sample and T2 (= f) into the sixth sample. Encoding device 100 does not transform the remaining components that are not adopted, for example, and decoding device 200 transforms e, which is the value of the fifth sample, into T1 and f, which is the value of the sixth sample, into B1. In addition, decoding device 200 regards the remaining components that are not adopted as 0, for example. In this example, decoding device 200 regards T2, T3, T4, B2, B3, and B4 as 0.

FIG. 38 is a diagram illustrating a second example of the correspondence between the components of the displacement vectors and the samples according to the embodiment. Specifically, FIG. 38 illustrates an example in which the fifth sample and the sixth sample are associated with two different samples among the four samples corresponding to the N axis. The two different samples can be any samples.

In this example, two displacement vectors among the four displacement vectors are each encoded using two samples, and the remaining two displacement vectors are each encoded using one sample. This example is advantageous when each of the T component and the B component is a dominant component of a different displacement vector.

In this example, for the fifth sample and the sixth sample, components of different vectors on different axes are adopted. In this example, T1 = e, and B4 = f. That is, in this example, encoding device 100 transforms T1 (= e) into the fifth sample and B4 (= f) into the sixth sample. Encoding device 100 does not transform the remaining components that are not adopted, for example, and decoding device 200 transforms e, which is the value of the fifth sample, into T1 and f, which is the value of the sixth sample, into B4. In addition, decoding device 200 regards the remaining components that are not adopted as 0, for example. In this example, decoding device 200 regards T2, T3, T4, B1, B2, and B3 as 0.

FIG. 39 is a diagram illustrating a third example of the correspondence between the components of the displacement vectors and the samples according to the embodiment. FIG. 40 is a diagram illustrating a fourth example of the correspondence between the components of the displacement vectors and the samples according to the embodiment. Specifically, FIGS. 39 and 40 illustrate examples in which the fifth sample and the sixth sample are associated with only one sample corresponding to the N axis. The one sample can be any sample.

In these examples, two displacement vectors among the four displacement vectors are each encoded using two samples, and the remaining two displacement vectors are each encoded using one sample. These examples are advantageous when one of the T axis and the B axis corresponds to a more dominant component of a displacement vector than the other, and only two components of the four components corresponding to the one axis are encoded.

In the example illustrated in FIG. 39, for the fifth sample and the sixth sample, components of different vectors on the same axis are adopted. In this example, T3 = e, and T2 = f. That is, in this example, encoding device 100 transforms T3 (= e) into the fifth sample and T2 (= f) into the sixth sample. Encoding device 100 does not transform the remaining components that are not adopted, for example, and decoding device 200 transforms e, which is the value of the fifth sample, into T3 and f, which is the value of the sixth sample, into T2. In addition, decoding device 200 regards the remaining components that are not adopted as 0, for example. In this example, decoding device 200 regards T1, T4, B1, B2, B3, and B4 as 0. In this example, in this way, only T components are transformed into the fifth sample and the sixth sample. That is, in this example, the T components to be transformed into the fifth sample and the sixth sample are any of the four T components. The remaining components that are not transformed by encoding device 100 are regarded as 0 by decoding device 200.

In the example illustrated in FIG. 40, for the fifth sample and the sixth sample, components of different vectors on the same axis are adopted. In this example, B1 = e, and B4 = f. That is, in this example, encoding device 100 transforms B1 (= e) into the fifth sample and B4 (= f) into the sixth sample. Encoding device 100 does not transform the remaining components that are not adopted, for example, and decoding device 200 transforms e, which is the value of the fifth sample, into B1 and f, which is the value of the sixth sample, into B4. In addition, decoding device 200 regards the remaining components that are not adopted as 0, for example. In this example, decoding device 200 regards T1, T2, T3, T4, B2, and B3 as 0. In this example, in this way, only B components are transformed into the fifth sample and the sixth sample. That is, in this example, the B components to be transformed into the fifth sample and the sixth sample are any of the four B components. The remaining components that are not transformed by encoding device 100 are regarded as 0 by decoding device 200.

FIG. 41 is a diagram illustrating a fifth example of the correspondence between the components of the displacement vectors and the samples according to the embodiment. FIG. 42 is a diagram illustrating a sixth example of the correspondence between the components of the displacement vectors and the samples according to the embodiment. Specifically, FIGS. 41 and 42 illustrate examples in which the fifth sample and the sixth sample are associated with two samples corresponding to the N axis. The two samples can be any samples. These examples are advantageous when one of the T axis and the B axis corresponds to a more dominant component of a displacement vector than the other, and two components of the four components corresponding to the one axis are transformed (sampled) into two samples.

In the example illustrated in FIG. 41, for the fifth sample and the sixth sample, components on the same axis are adopted. In this example, encoding device 100 transforms T1 or T3, the value of at least one of which is e, into the fifth sample. In addition, in this example, encoding device 100 transforms T2 or T4, the value of at least one of which is f, into the sixth sample. In addition, in this example, decoding device 200 transforms e, which is the value of the fifth sample, into T1 and T3, transforms f, which is the value of the sixth sample, into T2 and T4, and regards B1, B2, B3, and B4 as 0. In this example, in this way, only T components are transformed into the fifth sample and the sixth sample. That is, in this example, the T components to be transformed into the fifth sample and the sixth sample are any of the four T components. In addition, in this example, the fifth sample and the sixth sample are also transformed (copied) into T components that are not transformed into samples. The B components are regarded as 0 by decoding device 200.

In the example illustrated in FIG. 42, for the fifth sample and the sixth sample, components on the same axis are adopted. In this example, encoding device 100 transforms B1 or B2, the value of at least one of which is e, into the fifth sample. In addition, in this example, encoding device 100 transforms B3 or B4, the value of at least one of which is f, into the sixth sample. In addition, in this example, decoding device 200 transforms e, which is the value of the fifth sample, into B1 and B2, transforms f, which is the value of the sixth sample, into B3 and B4, and regards T1, T2, T3, and T4 as 0. In this example, in this way, only B components are transformed into the fifth sample and the sixth sample. That is, in this example, the B components to be transformed into the fifth sample and the sixth sample are any of the four B components. In addition, in this example, the fifth sample and the sixth sample are also transformed (copied) into B components that are not transformed into samples. The T components are regarded as 0 by decoding device 200.

FIG. 43 is a diagram illustrating a seventh example of the correspondence between the components of the displacement vectors and the samples according to the embodiment. Specifically, FIG. 43 illustrates an example in which the fifth sample and the sixth sample are associated with four samples corresponding to the N axis. The four samples can be any samples.

FIG. 44 is a diagram illustrating an eighth example of the correspondence between the components of the displacement vectors and the samples according to the embodiment. Specifically, FIG. 44 illustrates an example in which the fifth sample and the sixth sample are associated with three samples corresponding to the N axis. The three samples can be any samples.

These examples are advantageous when the T components, or the B components, have similar values. Therefore, in these examples, encoding device 100 averages the T components or the B components and transforms the average value into the fifth sample and the sixth sample, for example.

In the example illustrated in FIG. 43, for the fifth sample and the sixth sample, components on different axes are adopted. In this example, encoding device 100 transforms e, which is an average value of T1 to T4, into the fifth sample. In addition, in this example, encoding device 100 transforms f, which is an average value of B1 to B4, into the sixth sample. In addition, in this example, decoding device 200 transforms e, which is the value of the fifth sample, into T1 to T4, and transforms f, which is the value of the sixth sample, into B1 to B4.

In the example illustrated in FIG. 44, for the fifth sample and the sixth sample, components on different axes are adopted. In this example, encoding device 100 transforms e, which is an average value of T2 to T4, into the fifth sample. In addition, in this example, encoding device 100 transforms f, which is an average value of B1 to B3, into the sixth sample. In addition, in this example, decoding device 200 transforms e, which is the value of the fifth sample, into T2 to T4, transforms f, which is the value of the sixth sample, into B1 to B3, and regards T1 and B4 as 0.

As described above, in the example illustrated in FIG. 43, the fifth sample and the sixth samples are copied and transformed into four T components and four B components, respectively. Furthermore, in the example illustrated in FIG. 44, the fifth sample and the sixth samples are copied and transformed into three T components and three B components, respectively. In addition, the remaining one T component and the remaining one B component are regarded as 0 by decoding device 200.

FIG. 45 is a diagram illustrating a ninth example of the correspondence between the components of the displacement vectors and the samples according to the embodiment. Specifically, FIG. 45 illustrates an example in which the fifth sample is associated with one sample of the four samples corresponding to the N axis and the sixth sample is associated with the remaining three samples of the four samples corresponding to the N axis. The samples corresponding to the N axis with which the fifth sample and the sixth sample are associated can be any samples.

In this example, for the fifth sample and the sixth sample, components on different axes are adopted. In this example, encoding device 100 transforms T2 (= e) into the fifth sample. In addition, in this example, encoding device 100 transforms f, which is an average value of B1, B3, and B4, into the sixth sample. In addition, in this example, decoding device 200 transforms e, which is the value of the fifth sample, into T2, transforms f, which is the value of the sixth sample, into B1, B3, and B4, and regards T1, T3, T4, and B2 as 0.

As described above, in this example, the fifth sample is transformed into a T component, and the sixth sample is copied and transformed into three B components. In addition, the remaining three T components and the remaining one B component are regarded as 0 by decoding device 200.

FIG. 46 is a diagram illustrating a position of a parameter in a header of a bitstream according to the embodiment. FIG. 47 is a diagram illustrating a tenth example of the correspondence between the components of the displacement vectors and the samples according to the embodiment. Specifically, FIG. 47 illustrates an example of the other two samples (the Y sample and the U sample) associated with two of the four N samples.

The method of transforming four displacement vectors into six samples is determined by a parameter, and the parameter is encoded to the bitstream. As illustrated in FIG. 46, the parameter is notified in the header of the bitstream, for example. The parameter defines the method of transforming six samples into four displacement vectors. For example, the U sample and the V sample are each associated with one of the four N samples. As illustrated in FIG. 47, the six samples are transformed into four displacement vectors (a, 0, 0), (b, e, 0), (c, 0, f), and (d, 0, 0). In other words, the four displacement vectors (a, 0, 0), (b, e, 0), (c, 0, f), and (d, 0, 0) are transformed into the six samples illustrated in FIG. 47. Note that the transformation between the components and the samples may be achieved in other methods than the correspondence between the components and the samples illustrated in FIG. 47. One example of transformation (placement) of six samples is encoding of a dominant value by encoding device 100. For example, in the example illustrated in FIG. 47, when each non-zero value is a dominant value, the size of the bitstream can be reduced while minimizing the decrease in objective quality.

FIG. 48 is a diagram illustrating an example of signaling of a parameter according to the embodiment. Note that n denotes the total number of methods of transforming four displacement vectors into six samples.

FIG. 48 illustrates an example in which a look-up table is used to refer to a method of transforming four displacement vectors into six samples. The parameter described above is an index, in this example. Values of 1 in the look-up table indicate positions where the fifth sample and the sixth sample are transformed (placed). Note that it is assumed in this example that the first to fourth samples correspond to N1, N2, N3, and N4, respectively. Therefore, in this example, the correspondence between the first to fourth samples and components is not shown in the look-up table. Of course, the correspondence between the first to fourth samples and components may be shown in the look-up table.

FIG. 49 is a diagram illustrating a first example of signaling of a parameter in a header according to the embodiment.

In this example, the parameter includes a set of twelve syntaxes. Each syntax refers to a sample (sample 0 to sample 5) that occupies a position in a three-axis coordinate system. That is, each syntax refers to a sample that corresponds to a component of a displacement vector. For example, component_value[0] = 0 indicates that a zeroth position (N1, for example) assumes the value of sample 0.

FIG. 50 is a diagram illustrating a second example of the signaling of the parameter in the header according to the embodiment. FIG. 51 is a diagram illustrating an example of transformation of six samples into four displacement vectors in a three-axis coordinate system according to the embodiment.

In the example illustrated in FIG. 50, the parameter includes a set of eight syntaxes. It is assumed that zeroth to third positions (N1 to N4, for example) are always encoded, and fourth to eleventh positions (T1 to T4 and B1 to B4, for example) refer to a sample (sample 0 to sample 5) that occupies a position in a three-axis coordinate system illustrated in FIG. 51. For example, component_value[0] = 4 indicates that the fourth position of the first displacement vector (specifically, the 4^{th} position illustrated in FIG. 51) assumes the value of sample 4.

For example, in step S101, encoding device 100 can include, in the header of the bitstream, a format signal that defines a method of encoding displacement vectors. Based on the format signal, for example, encoding device 100 switches the method of encoding (transforming) displacement vectors between (i) a method of transforming all the components of the displacement vectors, (ii) a method of transforming only N components, and (iii) the method according to the present application. When the format signal is set to indicate the method (i) described above, encoding device 100 operates according to the YUV444 format. When the format signal is set to indicate the method (ii) described above, encoding device 100 operates according to the YUV400 format. When the format signal is set to indicate the method (iii) described above, encoding device 100 operates according to the YUV420 format.

Furthermore, the format signal may be used to determine whether the parameter is included in the bitstream. For example, when the format signal is set to indicate the method (iii) described above, the parameter is encoded in the bitstream. On the other hand, when the format signal is set to a method other than the method (iii), the parameter is not encoded in the bitstream.

Encoding of the parameter may be independent from the format signal.

FIG. 52 is a block diagram illustrating another example of the configuration of encoding device 100 according to the embodiment.

Encoding device 100 is configured to encode an input three-dimensional mesh frame to generate a bitstream (output bitstream) including the encoded three-dimensional mesh frame. As illustrated in FIG. 52, encoding device 100 includes deriver 701, transformer 702, and entropy encoder 703.

Deriver 701 derives four displacement vectors. That is, deriver 701 performs step S101.

Transformer 702 transforms the four displacement vectors into six samples. That is, transformer 702 performs step S102.

Entropy encoder 703 encodes the six samples to a bitstream. That is, entropy encoder 703 performs step S103.

Next, an example of an operation flow performed by encoding device 100 will be described. A three-dimensional mesh frame is input to deriver 701. The input three-dimensional mesh frame may be formed by a vertex to be encoded, connectivity, and an attribute. Deriver 701 derives four sets of displacement vectors. Here, each set of displacement vectors includes three components. Each component of the displacement vector represents the difference, on one of axes of a second coordinate system, between a first vertex in a first three-dimensional mesh frame and a second vertex in a second three-dimensional mesh frame. Transformer 702 then transforms four sets of displacement vectors into six samples. The components of the displacement vectors may be quantized or wavelet-transformed before being transformed into six samples. Finally, entropy encoder 703 encodes information, such as the six samples, and outputs the resulting bitstream (encoded bitstream). For example, an existing video codec, such as HEVC, VCC, or any customized arithmetic encoding, can be used for the encoding.

For example, the displacement vector can be represented using the N axis, the T axis, and the B axis (of a local coordinate system). The N axis, the T axis, and the B axis may be replaced with an x axis, a y axis, and a z axis (of a global coordinate system) or another type of three-axis coordinate system. For example, when a component corresponding to one axis has a more dominant value than components corresponding to the other two axes, the component corresponding to the one axis is signaled. Alternatively, for example, when components corresponding to two axes have a more dominant value than a component corresponding to the other axis, the components corresponding to the two axes are signaled. As illustrated in FIG. 36, the components on the N axis, the T axis, and the B axis are associated with each other to form a displacement vector as described below. Values of N1, T1, and B1 are associated with each other to form a first displacement vector. Furthermore, values of N2, T2, and B2 are associated with each other to form a second displacement vector. Furthermore, values of N3, T3, and B3 are associated with each other to form a third displacement vector. Furthermore, values of N4, T4, and B4 are associated with each other to form a fourth displacement vector.

As described above with reference to a plurality of patterns, transformer 702 encodes each component of the displacement vectors in such a manner that decoding device 200 can compensate for the components of the displacement vectors even when the YUV420 format is used, for example.

### <Decoding of Displacement Vector>

FIG. 53 is a flowchart illustrating decoding processing according to the embodiment. Decoding device 200 performs each step illustrated in FIG. 53.

First, decoding device 200 decodes six samples from a bitstream (S201). For example, decoding device 200 acquires a bitstream from encoding device 100, and acquires six samples included in the acquired bitstream. Among the six samples, four samples represent the difference on a first axis of three axes of a first coordinate system. In addition, among the six samples, the other two samples represent the difference on a different axis than the first axis of the first coordinate system.

Decoding device 200 then transforms (inverse-transforms) the decoded six samples into four displacement vectors (S202). Here, the four displacement vectors each include three components (component values). Each component of the displacement vector represents the difference, on one of axes of a second coordinate system, between a first vertex in a first three-dimensional mesh frame and a second vertex in a second three-dimensional mesh frame.

Decoding device 200 then reconstructs (generates) the first three-dimensional mesh frame using at least four displacement vectors (S203). Here, the first three-dimensional mesh frame is reconstructed by displacing vertexes in the second three-dimensional mesh frame using at least four displacement vectors.

In step S201, the six samples are decoded from the bitstream using a video codec, for example. Note that the video codec used for decoding the samples from the bitstream can be any video codec. As the video codec, an existing video codec, such as HEVC, VCC, or any customized arithmetic decoding, can be used.

In step S202, for example, the six samples are transformed into a set of four displacement vectors by directly copying the values of the samples to the components of the displacement vectors. Note that the six samples may be inverse-quantized or inverse wavelet-transformed before being transformed into components of the displacement vectors.

In step S203, for example, only one vertex in the second three-dimensional mesh frame is displaced using each of the four displacement vectors. Note that the four displacement vectors may be equal, and the first three-dimensional mesh frame may be reconstructed by displacing all the vertexes in the second three-dimensional mesh frame using one of the four displacement vectors.

For example, the displacement vector can be represented using the N axis, the T axis, and the B axis (of a local coordinate system). The N axis, the T axis, and the B axis may be replaced with an x axis, a y axis, and a z axis (of a global coordinate system) or another type of three-axis coordinate system. For example, when a component corresponding to one axis has a more dominant value than components corresponding to the other two axes, the component corresponding to the one axis is signaled. Alternatively, for example, when components corresponding to two axes have a more dominant value than a component corresponding to the other axis, the components corresponding to the two axes are signaled. As illustrated in FIG. 36, the components on the N axis, the T axis, and the B axis are associated with each other to form a vector as described below. Values of N1, T1, and B1 are associated with each other to form a first displacement vector, values of N2, T2, and B2 are associated with each other to form a second displacement vector, values of N3, T3, and B3 are associated with each other to form a third displacement vector, and values of N4, T4, and B4 are associated with each other to form a fourth displacement vector.

The present disclosure proposes several patterns for compensating for each component of a displacement vector when the YUV420 format is used in step S202.

FIG. 37 illustrates an example in which the fifth sample (having a value of e) and the sixth sample (having a value of f) are associated with the same sample among a plurality of samples (specifically, four Y samples corresponding to the N components) corresponding to a first axis (N axis in this example). The same sample can be any one sample corresponding to the first axis. This example is advantageous in that when one displacement vector among the four displacement vectors has a more dominant component than the other displacement vectors, the components of the displacement vector can be decoded using the fifth sample and the sixth sample. In this case, the one displacement vector is decoded using three samples, and the remaining displacement vectors are each decoded using one sample.

FIG. 38 illustrates an example in which the fifth sample and the sixth sample are associated with two different samples among a plurality of samples corresponding to the first axis. The two different samples can be any two samples among the plurality of samples corresponding to the first axis. In this example, two displacement vectors are each decoded using two samples, and the remaining displacement vectors are each decoded using one sample. This example is advantageous when each component corresponding to the T axis or the B axis is part of a different displacement vector, and each of the different displacement vectors has one dominant component.

FIGS. 39 and 40 illustrate examples in which the fifth sample and the sixth sample that are samples corresponding to the same axis are each associated with only one sample among a plurality of samples corresponding to the first axis. Note that the sample corresponding to the first axis that is associated with the fifth sample and the sixth sample can be any sample. These examples are advantageous when components corresponding to one of the T axis and the B axis are more dominant components than components corresponding to the other axis, and only two components corresponding to the one axis are decoded.

FIGS. 41 and 42 illustrate examples in which the fifth sample and the sixth sample corresponding to the same axis are each associated with two samples corresponding to the first axis. Note that the samples corresponding to the first axis associated with the fifth sample and the sixth sample can be any samples. These examples are advantageous when components corresponding to one of the T axis and the B axis are more dominant component than components corresponding to the other axis, and two of the four components corresponding to the one axis are sampled.

FIG. 44 illustrates an example in which the fifth sample and the sixth sample corresponding to different axes are each associated with three samples corresponding to the first axis. Note that the samples corresponding to the first axis associated with the fifth sample and the sixth sample can be any samples. FIG. 43 illustrates an example in which the fifth sample and the sixth sample corresponding to different axes are each associated with four samples corresponding to the first axis. Note that the samples corresponding to the first axis associated with the fifth sample and the sixth sample can be any samples. These examples are applied to a case where the components on the T axis and the B axis have similar values. For example, encoding device 100 outputs the fifth sample or the sixth sample whose components corresponding to the T axis or the B axis are averaged. Decoding device 200 determines the components corresponding to the T axis or the B axis using the fifth sample or the sixth sample whose components corresponding to the T axis or the B axis are averaged.

FIG. 45 illustrates an example in which the fifth sample corresponding to a second axis is associated with a sample corresponding to the first axis and the sixth sample corresponding to a third axis is associated with three samples of the four samples corresponding to the first axis. The samples corresponding to the first axis associated with the fifth sample and the sixth sample can be any samples.

The method of transforming four displacement vectors into six samples is determined by a parameter, and the parameter is decoded from the bitstream. In the example illustrated in FIG. 46, the parameter may be notified in the header of the bitstream. In this way, the method of transforming six samples into four displacement vectors is defined. For example, among the six samples, the other two samples described above (specifically, the U sample and the V sample) are each associated with one of the four samples described above (specifically, the four Y samples). In the example illustrated in FIG. 47, the six samples are transformed into four sets of displacement vectors (a, 0, 0), (b, e, 0), (c, 0, f), and (d, 0, 0). Note that the six samples may be transformed into four different sets of displacement vectors by being placed for components of displacement vectors in a method other than the method described above. For example, the six samples may be placed by decoding device 200 choosing to decode a dominant value. For example, decoding device 200 acquires the placement for decoding. For example, in the example illustrated in FIG. 47, when each non-zero value is a dominant value, the size of the bitstream is effectively reduced while minimizing the decrease in objective quality.

FIG. 48 illustrates an example in which a look-up table is used to refer to a method of transforming four displacement vectors into six samples (in other words, a method of transforming six samples into four displacement vectors). In this example, the parameter is an index. Values of 1 in the look-up table indicate positions where the fifth sample and the sixth sample are placed. In this example, it is assumed that the first four samples are for N1, N2, N3, and N4.

FIG. 49 illustrates an example of signaling of a parameter in a header. In this example, the parameter includes a set of twelve syntaxes. Each syntax indicates a sample (0 to 5) that occupies a position in the three-axis coordinate system illustrated in FIG. 51. For example, component_value[0] = 0 indicates that a zeroth position of a first displacement vector is occupied by the value of sample 0.

FIG. 50 illustrates an example of signaling of a parameter in a header. In this example, the parameter includes a set of eight syntaxes. Zeroth to third positions of the displacement vectors illustrated in FIG. 51 are always encoded. Furthermore, for example, fourth to eleventh positions of the displacement vectors illustrated in FIG. 51 refer to a sample (0 to 5) that occupies a position in the three-axis coordinate system illustrated in FIG. 51. For example, component_value[0] = 4 indicates that the fourth position of the first displacement vector is occupied by the value of sample 4.

For example, in step S101, encoding device 100 includes, in the header of the bitstream, a format signal that defines a method of decoding displacement vectors. Based on the format signal, decoding device 200 switches the target of application of samples between three-dimensional displacement vectors (that is, all the components included in displacement vectors), displacement vectors including only normal components (that is, only N components included in displacement vectors), and displacement vectors according to the method according to the present disclosure (that is, components determined according to the method described above). When the format signal is set to indicate the three-dimensional displacement vectors, decoding device 200 operates according to the YUV444 format. When the format signal is set to indicate the displacement vectors including only normal components, decoding device 200 operates according to the YUV400 format. When the format signal is set to indicate the displacement vectors according to the method according to the present disclosure, decoding device 200 operates according to the YUV420 format.

Note that whether the parameter exists in the bitstream may be determined based on the format signal. For example, when the format signal is set to indicate the displacement vectors according to the method according to the present disclosure, the parameter is decoded. On the other hand, for example, when the format signal is set to another method, the parameter is not decoded.

Furthermore, decoding of the parameter may be independent from the format signal.

FIG. 54 is a block diagram illustrating another example of the configuration of decoding device 200 according to the embodiment.

Decoding device 200 is configured to decode an input bitstream (input encoded bitstream) and output a mesh geometry (three-dimensional mesh frame). As illustrated in FIG. 54, decoding device 200 includes entropy decoder 801, transformer 802, and reconstructor 803.

Entropy decoder 801 decodes six samples from the bitstream. That is, entropy decoder 801 performs step S201.

Transformer 802 transforms the decoded six samples into four displacement vectors. That is, transformer 802 performs step S202.

Reconstructor 803 reconstructs a first three-dimensional mesh frame using at least the four displacement vectors. That is, reconstructor 803 performs step S203.

Next, an example of an operation flow of decoding device 200 will be described. The input bitstream is input to entropy decoder 801. For example, a video codec is used to decode six samples from the bitstream. Note that the video codec used for decoding the samples from the bitstream can be any video codec. As the video codec, an existing video codec, such as HEVC, VCC, or any customized arithmetic encoding, is used. Transformer 802 then transforms the decoded six samples into four sets of displacement vectors by directly copying the components of the displacement vectors from the samples. Each set of displacement vectors has three components. Note that the six samples may be inverse-quantized or inverse wavelet-transformed before being transformed into the components of the displacement vectors. Finally, reconstructor 803 reconstructs the first three-dimensional mesh frame by displacing only one vertex in the second three-dimensional mesh frame using each of the four displacement vectors. Note that the four sets of displacement vectors may be equal, and reconstructor 803 may reconstruct the first three-dimensional mesh frame by displacing all the vertexes in the second three-dimensional mesh frame using one of the four displacement vectors.

For example, the displacement vector can be represented using the N axis, the T axis, and the B axis (of a local coordinate system). The N axis, the T axis, and the B axis may be replaced with an x axis, a y axis, and a z axis (of a global coordinate system) or another type of three-axis coordinate system. For example, when a component corresponding to one axis has a more dominant value than components corresponding to the other two axes, the component corresponding to the one axis is signaled. Alternatively, for example, when components corresponding to two axes have a more dominant value than a component corresponding to the other axis, the components corresponding to the two axes are signaled. As illustrated in FIG. 36, the components on the N axis, the T axis, and the B axis are associated with each other to form a vector as described below. Values of N1, T1, and B1 are associated with each other to form a first displacement vector, values of N2, T2, and B2 are associated with each other to form a second displacement vector, values of N3, T3, and B3 are associated with each other to form a third displacement vector, and values of N4, T4, and B4 are associated with each other to form a fourth displacement vector.

As described above with reference to a plurality of patterns, transformer 802 compensates for some components of the displacement vectors even if each component of the displacement vectors is encoded using the YUV420 format, for example.

### <Supplements>

As described above, the encoding processing of position information of a three-dimensional point described in a plurality of embodiments of the present disclosure can be applied to encoding of position information of a three-dimensional point in a point cloud compression scheme, such as video-based PCC (V-PCC) or geometry-based PCC (G-PCC), for example.

As illustrated in FIGS. 26 and 53, for example, the present disclosure discloses a configuration for encoding only part of the coordinates forming a plurality of displacement vectors of a three-dimensional mesh in encoding of the plurality of displacement vectors. When four displacement vectors corresponding to four vertexes forming a three-dimensional mesh have values of twelve samples in total, the present disclosure discloses a configuration for encoding only six samples of the twelve samples, for example.

Here, four samples of the six samples correspond to the same component, and the other two samples of the six samples correspond to different components than those to which the four samples correspond. Specifically, for each of the four displacement vectors, a coordinate corresponding to one of the three components is encoded, and coordinates corresponding to the remaining two components are generated based on the encoded sample and a parameter or the like.

However, the configuration according to the present disclosure described above is not intended to be limiting, and the processing and configuration may be partially modified from a viewpoint of the tradeoff between the reduction in code amount and the improvement of encoding performance or another viewpoint.

For example, among the twelve samples, only four samples corresponding to the same component and one sample corresponding to another component may be encoded. Alternatively, for example, among the twelve samples, only four samples corresponding to the same component and three samples corresponding to another component may be encoded. Alternatively, for example, among the twelve samples, only four samples corresponding to the same component and four samples corresponding to another component may be encoded. Note that, in the latter case, the encoding may be performed using the YUV422 format. Furthermore, for example, the four vertexes to which the displacement vectors to be encoded correspond may belong to the same object. Furthermore, for example, the four vertexes may belong to the same frame. Furthermore, for example, the four vertexes may have connectivity so that the vertexes are connected to each other. Furthermore, for example, at least any of the four vertexes may form the same mesh. Furthermore, for example, the four vertexes may belong to the same plane. Note that the configuration according to the present disclosure may be applied to encoding of coordinates of a vector other than the displacement vector.

Furthermore, FIGS. 46 to 51 described above disclose examples of an index or parameter that indicates the correspondence between encoded samples and components of displacement vectors.

Referring to FIG. 46, the index or parameter may be encoded in any of a picture header, a slice header, a coding tree unit (CTU) header, and a coding unit (CU) header. Alternatively, the index or parameter may be encoded in any of a video parameter set (VPS), a sequence parameter set (SPS), a picture parameter set (PPS), and supplemental enhancement information (SEI).

Referring to FIG. 48, the index may include a value that indicates that any of the values of T1 to T4 and B1 to B4 is not encoded. Alternatively, when any of the values of T1 to T4 and B1 to B4 is not encoded, the index need not be encoded. Alternatively, when any of the values of T1 to T4 and B1 to B4 is not encoded, the value of the index may be 0. Alternatively, the value of the index may be specified in association with the value of another encoding parameter. Alternatively, the possible value of the index may be limited in association with the value of another encoding parameter. When encoding device 100 does not encode any of the values of T1 to T4 and B1 to B4, encoding device 100 may set the U sample and the V sample to an arbitrary value. In that case, for example, decoding device 200 may regard T1 to T4 and B1 to B4 as 0, regardless of the values of the U sample and the V sample. Furthermore, for example, encoding device 100 may set the values of the U sample and the V sample to 0, regardless of the values of T1 to T4 and B1 to B4.

Referring to FIG. 50, component_value[i] may be 1 bit of u(1) and only assume a value of 0 or 1, thereby reducing the bit amount. In that case, the value of 0 may correspond to sample 4 in FIG. 51, and the value of 1 may correspond to sample 5. Furthermore, referring to FIGS. 49 and 50, component_value[i] may include a value that indicates that the values of the T component and the B component are 0. Alternatively, when the values of the T component and the B component are 0, component_value[i] need not be encoded.

Note that concerning step S102, in transformation of twelve samples into six samples, a value obtained by application of a calculation, such as an average value, a maximum value, or a minimum value, may be used, instead of direct copying, in which the values are used without change by copying.

As described above, the present disclosure introduces a new approach for encoding and decoding a three-dimensional mesh frame used for compression of a digital image. The three-dimensional mesh frame can include a base mesh and displacement information. The displacement information can be applied to the base mesh for reconstructing the three-dimensional mesh frame. According to the present disclosure, the complexity of the video decoding device can be reduced.

In the following, techniques obtained from the contents disclosed in this specification will be illustrated.

### [Technique 1]

A mesh encoding method includes: deriving four displacement vectors (S101), the four displacement vectors each including three components, the three components included in each of the four displacement vectors each representing a difference between a first vertex in a first three-dimensional mesh frame and a second vertex in a second three-dimensional mesh frame in one of axes of a second coordinate system; transforming the four displacement vectors into six samples (S102), the six samples including four samples representing differences in a first axis of three axes in a first coordinate system and other two samples representing differences in an axis different from the first axis of the three axes in the first coordinate system; and encoding the six samples to a bitstream (S103).

### [Technique 2]

The mesh encoding method according to Technique 1, in which the other two samples represent differences in a same axis different from the first axis of the first coordinate system.

### [Technique 3]

The mesh encoding method according to Technique 1, in which the other two samples represent differences in different axes different from the first axis of the first coordinate system.

### [Technique 4]

The mesh encoding method according to Technique 1, in which the first coordinate system is identical to the second coordinate system.

### [Technique 5]

The mesh encoding method according to Technique 1, in which the first coordinate system is different from the second coordinate system.

### [Technique 6]

The mesh encoding method according to Technique 1, in which the six samples are encoded using a video codec.

### [Technique 7]

The mesh encoding method according to Technique 6, in which the video codec is high efficiency video coding (HEVC) or versatile video coding (VVC).

### [Technique 8]

The mesh encoding method according to Technique 1, in which the six samples are encoded by arithmetic coding.

### [Technique 9]

The mesh encoding method according to Technique 8, in which the arithmetic coding is delta coding.

### [Technique 10]

The mesh encoding method according to Technique 1, in which the four displacement vectors are transformed into the six samples using a predetermined method.

### [Technique 11]

The mesh encoding method according to Technique 1, in which the four displacement vectors are transformed into the six samples using a method determined by a parameter that is encoded to the bitstream.

### [Technique 12]

The mesh encoding method according to Technique 11, in which the parameter is encoded to a header of the bitstream.

### [Technique 13]

The mesh encoding method according to Technique 1, in which the first coordinate system or the second coordinate system is a global coordinate system.

### [Technique 14]

The mesh encoding method according to Technique 1, in which the first coordinate system or the second coordinate system is a local coordinate system.

### [Technique 15]

A mesh decoding method includes: decoding six samples from a bitstream (S201), the six samples including four samples representing differences in a first axis of three axes in a first coordinate system and other two samples representing differences in an axis different from the first axis of the three axes in the first coordinate system; transforming the six samples decoded into four displacement vectors (S202), the four displacement vectors each including three components, the three components included in each of the four displacement vectors each representing a difference between a first vertex in a first three-dimensional mesh frame and a second vertex in a second three-dimensional mesh frame in one of axes of a second coordinate system; and reconstructing the first three-dimensional mesh frame (S203), in which the first three-dimensional mesh frame is reconstructed by displacing vertices of the second three-dimensional mesh frame using at least the four displacement vectors.

### [Technique 16]

The mesh decoding method according to Technique 15, in which the other two samples represent differences in a same axis different from the first axis of the first coordinate system.

### [Technique 17]

The mesh decoding method according to Technique 15, in which the other two samples represent differences in different axes different from the first axis of the first coordinate system.

### [Technique 18]

The mesh decoding method according to Technique 15, in which the first coordinate system is identical to the second coordinate system.

### [Technique 19]

The mesh decoding method according to Technique 15, in which the first coordinate system is different from the second coordinate system.

### [Technique 20]

The mesh decoding method according to Technique 15, in which the six samples are decoded using a video codec.

### [Technique 21]

The mesh decoding method according to Technique 20, in which the video codec is high efficiency video coding (HEVC) or versatile video coding (VVC).

### [Technique 22]

The mesh decoding method according to Technique 15, in which the six samples are decoded by arithmetic coding.

### [Technique 23]

The mesh decoding method according to Technique 22, in which the arithmetic coding is delta coding.

### [Technique 24]

The mesh decoding method according to Technique 15, in which the six samples decoded are transformed into the four displacement vectors using a predetermined method.

### [Technique 25]

The mesh decoding method according to Technique 15, in which the six samples decoded are transformed into the four displacement vectors using a method determined by a parameter decoded from the bitstream.

### [Technique 26]

The mesh decoding method according to Technique 25, in which the parameter is decoded from a header of the bitstream.

### [Technique 27]

The mesh decoding method according to Technique 15, in which the first coordinate system or the second coordinate system is a global coordinate system.

### [Technique 28]

The mesh decoding method according to Technique 15, in which the first coordinate system or the second coordinate system is a local coordinate system.

### [Technique 29]

A mesh encoding device: derives four displacement vectors (S101), the four displacement vectors each including three components, the three components included in each of the four displacement vectors each representing a difference between a first vertex in a first three-dimensional mesh frame and a second vertex in a second three-dimensional mesh frame in one of axes of a second coordinate system; transforms the four displacement vectors into six samples (S102), the six samples including four samples representing differences in a first axis of three axes in a first coordinate system and other two samples representing differences in an axis different from the first axis of the three axes in the first coordinate system; and encodes the six samples to a bitstream (S103).

### [Technique 30]

The mesh encoding device according to Technique 29, in which the other two samples represent differences in a same axis different from the first axis of the first coordinate system.

### [Technique 31]

The mesh encoding device according to Technique 29, in which the other two samples represent differences in different axes different from the first axis of the first coordinate system.

### [Technique 32]

The mesh encoding device according to Technique 29, in which the first coordinate system is identical to the second coordinate system.

### [Technique 33]

The mesh encoding device according to Technique 29, in which the first coordinate system is different from the second coordinate system.

### [Technique 34]

The mesh encoding device according to Technique 29, in which the six samples are encoded using a video codec.

### [Technique 35]

The mesh encoding device according to Technique 34, in which the video codec is high efficiency video coding (HEVC) or versatile video coding (VVC).

### [Technique 36]

The mesh encoding device according to Technique 29, in which the six samples are encoded by arithmetic coding.

### [Technique 37]

The mesh encoding device according to Technique 36, in which the arithmetic coding is delta coding.

### [Technique 38]

The mesh encoding device according to Technique 29, in which the four displacement vectors are transformed into the six samples using a predetermined method.

### [Technique 39]

The mesh encoding device according to Technique 29, in which the four displacement vectors are transformed into the six samples using a method determined by a parameter that is encoded to the bitstream.

### [Technique 40]

The mesh encoding device according to Technique 29, in which the parameter is encoded to a header of the bitstream.

### [Technique 41]

The mesh encoding device according to Technique 29, in which the first coordinate system or the second coordinate system is a global coordinate system.

### [Technique 42]

The mesh encoding device according to Technique 29, in which the first coordinate system or the second coordinate system is a local coordinate system.

### [Technique 43]

A mesh decoding device: decodes six samples from a bitstream (S201), the six samples including four samples representing differences in a first axis of three axes in a first coordinate system and other two samples representing differences in an axis different from the first axis of the three axes in the first coordinate system; transforms the six samples decoded into four displacement vectors (S202), the four displacement vectors each including three components, the three components included in each of the four displacement vectors each representing a difference between a first vertex in a first three-dimensional mesh frame and a second vertex in a second three-dimensional mesh frame in one of axes of a second coordinate system; and reconstructs the first three-dimensional mesh frame (S203), in which the first three-dimensional mesh frame is reconstructed by displacing vertices of the second three-dimensional mesh frame using at least the four displacement vectors.

### [Technique 44]

The mesh decoding device according to Technique 43, in which the other two samples represent differences in a same axis different from the first axis of the first coordinate system.

### [Technique 45]

The mesh decoding device according to Technique 43, in which the other two samples represent differences in different axes different from the first axis of the first coordinate system.

### [Technique 46]

The mesh decoding device according to Technique 43, in which the first coordinate system is identical to the second coordinate system.

### [Technique 47]

The mesh decoding device according to Technique 43, in which the first coordinate system is different from the second coordinate system.

### [Technique 48]

The mesh decoding device according to Technique 43, in which the six samples are decoded using a video codec.

### [Technique 49]

The mesh decoding device according to Technique 48, in which the video codec is high efficiency video coding (HEVC) or versatile video coding (VVC).

### [Technique 50]

The mesh decoding device according to Technique 43, in which the six samples are decoded by arithmetic coding.

### [Technique 51]

The mesh decoding device according to Technique 50, in which the arithmetic coding is delta coding.

### [Technique 52]

The mesh decoding device according to Technique 43, in which the six samples decoded are transformed into the four displacement vectors using a predetermined method.

### [Technique 53]

The mesh decoding device according to Technique 43, in which the six samples decoded are transformed into the four displacement vectors using a method determined by a parameter decoded from the bitstream.

### [Technique 54]

The mesh decoding device according to Technique 53, in which the parameter is decoded from a header of the bitstream.

### [Technique 55]

The mesh decoding device according to Technique 43, in which the first coordinate system or the second coordinate system is a global coordinate system.

### [Technique 56]

The mesh decoding device according to Technique 55, in which the first coordinate system or the second coordinate system is a local coordinate system.

### <Representative Examples>

FIG. 55 is a flowchart illustrating an example of basic encoding processing according to the embodiment. For example, circuit 151 in encoding device 100 illustrated in FIG. 24 performs the encoding processing illustrated in FIG. 55 in operation.

First, encoding device 100 transforms displacement vectors into samples in a predetermined YUV format, the displacement vectors representing displacements for correcting three-dimensional points included in a three-dimensional mesh frame (S301). The plurality of displacement vectors are the four displacement vectors described above, for example. In addition, the predetermined YUV format is the YUV422 format described above, for example. In addition, the plurality of samples are the six samples (first sample to sixth sample) described above, for example. Note that the numbers of the plurality of displacement vectors and the plurality of samples are not particularly limited. The plurality of displacement vectors each include three components (component values) as described above, for example. The total number of the component values of the plurality of displacement vectors is smaller than the total number of the plurality of samples, for example. In addition, when transforming the displacement vectors into the samples, the component values of the displacement vectors may be directly copied as described above, or processing, such as quantization, may be performed on the component values.

Next, encoding device 100 encodes the samples to a bitstream (S302). Specifically, encoding device 100 generates bitstreams including the samples. Here, the samples include two or more Y samples corresponding to Y, one or more U samples corresponding to U, and one or more V samples corresponding to V. In addition, the two or more Y samples are more numerous than the one or more U samples and the one or more V samples.

Accordingly, the plurality of displacement vectors can be transformed into the plurality of samples using the predetermined YUV format. In addition, the plurality of displacement vectors can be encoded using a YUV format in which the total number of Y samples is greater than the total number of U samples and greater than the total number of V samples. By using such a YUV format, an appropriate tradeoff can be made between the quality of the reconstructed three-dimensional mesh frame and the size of the bitstream.

Moreover, for example, each of the displacement vectors may include component values including a component value corresponding to a first axis, a component value corresponding to a second axis different from the first axis, and a component value corresponding to a third axis different from the first axis and the second axis, the first axis, the second axis, and the third axis being included in a predetermined three-axis coordinate system. The predetermined three-axis coordinate system is the local coordinate system (a coordinate system including an N axis, a T axis, and a B axis) describe above. For example, the component value corresponding to the first axis is the value of the N component, the component value corresponding to the second axis is the value of the T component, and the component value corresponding to the third axis is the value of the B component.

Accordingly, the number of the types of the samples is equal to the number of the component values of the displacement vectors corresponding to the axes. When component values of a plurality of displacement vectors corresponding to the same axis have similar values, for example, the component values can be transformed and encoded into the same type of samples, thereby improving the encoding efficiency.

Furthermore, for example, in the transforming, among the component values, all component values may be transformed into the two or more Y samples, all the component values being component values each of which is included in a different one of the displacement vectors and that correspond to the first axis.

Accordingly, when the component values of the plurality of displacement vectors corresponding to the first axis have similar values, the encoding efficiency can be improved.

Moreover, for example, in the transforming, among the component values, only one or more of two or more component values may be transformed into the one or more U samples or the one or more V samples, the two or more component values being component values each of which is included in a different one of the displacement vectors and that correspond to the second axis or the third axis.

Accordingly, when the component values of the plurality of displacement vectors corresponding to the second axis or third axis have similar values, the encoding efficiency can be improved. In addition, by transforming only part of two or more component values into the U sample or V sample, the code amount can be reduced.

Furthermore, for example, the predetermined YUV format may include no values of the second axis.

That is, the plurality of samples need not include samples transformed from the component values corresponding to the second axis. In other words, in the transformation described above, the component values corresponding to the second axis need not be transformed into samples. Accordingly, the code amount can be reduced. In addition, when the values on the second axis (that is, the component values corresponding to the second axis) are close to 0, for example, the code amount can be reduced while reducing the decrease in quality of the reconstructed three-dimensional mesh frame.

Moreover, for example, the predetermined YUV format may include no values of the third axis.

That is, the plurality of samples need not include samples transformed from the component values corresponding to the third axis. In other words, in the transformation described above, the component values corresponding to the third axis need not be transformed into samples. Accordingly, the code amount can be reduced. In addition, when the values on the third axis (that is, the component values corresponding to the third axis) are close to 0, for example, the code amount can be reduced while reducing the decrease in quality of the reconstructed three-dimensional mesh frame.

Furthermore, for example, the predetermined three-axis coordinate system may be a local coordinate system corresponding to each of the three-dimensional points.

Accordingly, important component values included in the displacement vectors, such as component values in axial directions corresponding to the normal directions of three-dimensional points in the local coordinate system, and the other component values can be transformed and encoded into different types of samples. Therefore, the code amount can be reduced while reducing the decrease in quality of the reconstructed three-dimensional mesh frame.

Moreover, for example, the three-axis coordinate system may be a global coordinate system.

Accordingly, the encoding of displacement vectors using a predetermined YUV format can be more easily used.

Furthermore, for example, the predetermined YUV format may be a YUV 420 format or a YUV 422 format.

Accordingly, by using such a YUV format, an appropriate tradeoff can be made between the quality of the reconstructed three-dimensional mesh frame and the size of the bitstream.

FIG. 56 is a flowchart illustrating an example of basic decoding processing according to the embodiment. For example, circuit 251 in decoding device 200 illustrated in FIG. 25 performs the decoding processing illustrated in FIG. 56 in operation.

First, decoding device 200 decodes samples in a predetermined YUV format from a bitstream (S401).

Next, decoding device 200 transforms the samples decoded into displacement vectors representing displacements for correcting three-dimensional points (S402). Note that when transforming the samples into displacement vectors, the samples may be copied without change as described above or may be subjected to processing, such as inverse quantization. In addition, at least part of the plurality of component values included in the plurality of displacement vectors have only to be generated based on the plurality of samples, and all the component values need not be generated from the plurality of samples. For example, some of the plurality of component values may be generated from the plurality of samples, and the remaining component values may be assigned a numeric value, such as 0.

Then, decoding device 200 reconstructs a three-dimensional mesh frame including the three-dimensional points corrected using the displacement vectors (S402). For example, decoding device 200 generates a three-dimensional mesh frame by correcting positions of the three-dimensional points based on the displacement vectors. Here, the samples include two or more Y samples corresponding to Y, one or more U samples corresponding to U, and one or more V samples corresponding to V.

Accordingly, the plurality of samples transformed using the predetermined YUV format can be transformed into the plurality of displacement vectors. In addition, the plurality of samples can be decoded using a YUV format in which the total number of Y samples is greater than the total number of U samples and greater than the total number of V samples. By using such a YUV format, an appropriate tradeoff can be made between the quality of the reconstructed three-dimensional mesh frame and the size of the bitstream.

Moreover, for example, each of the displacement vectors may include component values including a component value corresponding to a first axis, a component value corresponding to a second axis different from the first axis, and a component value corresponding to a third axis different from the first axis and the second axis, the first axis, the second axis, and the third axis being included in a predetermined three-axis coordinate system.

Accordingly, the number of the types of the samples is equal to the number of the component values of the displacement vectors corresponding to the axes. When component values of a plurality of displacement vectors corresponding to the same axis have similar values, the decoding efficiency can be improved.

Furthermore, for example, in the transforming, all the two or more Y samples may be transformed into, among the component values, component values each of which is included in a different one of the displacement vectors and that correspond to the first axis.

Accordingly, when the component values of the plurality of displacement vectors corresponding to the first axis have similar values, the decoding efficiency can be improved.

Moreover, for example, in the transforming, the one or more U samples or the one or more V samples may be transformed into at least one of two or more component values each of which is included in a different one of the displacement vectors and that correspond to the second axis or the third axis.

Accordingly, when the component values of the plurality of displacement vectors corresponding to the second axis or third axis have similar values, the decoding efficiency can be improved.

Furthermore, for example, in the transforming, one or more component values into which none of the samples is transformed may be caused to be 0, the one or more component values being included in, among the component values, two or more component values each of which is included in a different one of the displacement vectors and that correspond to the second axis or the third axis.

Accordingly, when the two or more component values described above are close to 0, the decoding processing can be reduced while reducing the decrease in quality of the reconstructed three-dimensional mesh frame and reducing the size of the bitstream.

Moreover, for example, the predetermined three-axis coordinate system may be a local coordinate system corresponding to each of the three-dimensional points.

Accordingly, when important component values included in the displacement vectors, such as component values in axial directions corresponding to the normal directions of three-dimensional points in the local coordinate system, and the other component values are transformed into different types of samples, each of such samples can be decoded. Therefore, the decoding processing can be reduced.

Furthermore, for example, the three-axis coordinate system may be a global coordinate system.

Accordingly, the decoding of displacement vectors encoded using a predetermined YUV format can be more easily used.

Moreover, for example, the predetermined YUV format may be a YUV 420 format or a YUV 422 format.

Accordingly, by using such a YUV format, an appropriate tradeoff can be made between the quality of the reconstructed three-dimensional mesh frame and the size of the bitstream.

### <Other examples>

Although the aspects of encoding device 100 and decoding device 200 have thus far been described according to the embodiment, the aspects of encoding device 100 and decoding device 200 are not limited to the embodiment. Modifications that may be conceived by a person skilled in the art may be applied to the embodiment, and a plurality of constituent elements in the embodiment may be combined in any manner.

For example, processing performed by a specific constituent element in the embodiment may be performed by a different constituent element instead of the specific constituent element. Moreover, the order of processes may be changed or processes may be performed in parallel.

In addition, encoding and decoding according to the present disclosure can be applied to encoding and decoding of vertex information indicating a position of a vertex. Note that the encoding and decoding according to the present disclosure is not limited to a vertex on a geometry map and a vertex on a texture map and may be applied to encoding and decoding vertex information indicating position of other vertexes. Furthermore, each processing step according to the present disclosure may be performed as one of a plurality of selectable processing steps.

Moreover, as stated above, it is possible to implement, as an integrated circuit, at least part of the plurality of constituent elements in the present disclosure. At least part of the processes in the present disclosure may be used as an encoding method or a decoding method. A program for causing a computer to execute the encoding method or the decoding method may be used. Furthermore, a non-transitory computer-readable recording medium on which the program is recorded may be used. In addition, a bitstream for causing decoding device 200 to perform decoding may be used.

Moreover, at least part of the plurality of constituent elements and the processes in the present disclosure may be used as a transmitting device, a receiving device, a transmitting method, and a receiving method. A program for causing a computer to execute the transmitting method or the receiving method may be used. Furthermore, a non-transitory computer-readable recording medium on which the program is recorded may be used.

### [Industrial Applicability]

The present disclosure is useful in, for example, an encoding device, a decoding device, a transmitting device, a receiving device, and the like related to a three-dimensional mesh and can be applied to a computer graphics system, a three-dimensional data display system, and the like.

### [Reference Signs List]

- 100: encoding device
- 101, 121, 144: vertex information encoder
- 102, 145: connection information encoder
- 103, 122: attribute information encoder
- 104, 204, 521: preprocessor
- 105, 205, 623: postprocessor
- 110: three-dimensional data encoding system
- 111, 211: controller
- 112, 212: input/output processor
- 113: three-dimensional data encoder
- 114: system multiplexer
- 115: three-dimensional data generator
- 123: metadata encoder
- 124: multiplexer
- 131: vertex image generator
- 132: attribute image generator
- 133: metadata generator
- 134: video encoder
- 141: two-dimensional data encoder
- 142: mesh data encoder
- 143: texture encoder
- 148: description encoder
- 151, 251: circuit
- 152, 252: memory
- 200: decoding device
- 201, 221, 244: vertex information decoder
- 202, 245: connection information decoder
- 203, 222: attribute information decoder
- 210: three-dimensional data decoding system
- 213: three-dimensional data decoder
- 214: system demultiplexer
- 215, 247: presenter
- 216: user interface
- 223: metadata decoder
- 224: demultiplexer
- 231: vertex information generator
- 232: attribute information generator
- 234, 631: video decoder
- 241: two-dimensional data decoder
- 242: mesh data decoder
- 243: texture decoder
- 246: mesh reconstructor
- 248: description decoder
- 300: network
- 310: external connector
- 511: volumetric capturer
- 512: projector
- 513: base mesh encoder
- 514: displacement encoder
- 515: attribute encoder
- 516: encoder of another type
- 522: encoding processor
- 613: base mesh decoder
- 614: displacement decoder
- 615: attribute decoder
- 616: decoder of another type
- 617: three-dimensional reconstructor
- 622: decoding processor
- 632: image decompressor
- 633: inverse quantizer
- 634: inverse wavelet transformer
- 641: frame header decoder
- 642: vertex geometry coordinate predictor
- 643: vertex geometry coordinate difference decoder
- 644: reconstruction module
- 701: deriver
- 702, 802: transformer
- 703: entropy encoder
- 801: entropy decoder
- 803: reconstructor

## Claims

1. An encoding method comprising:
transforming displacement vectors into samples in a predetermined YUV format, the displacement vectors representing displacements for correcting three-dimensional points included in a three-dimensional mesh frame; and
encoding the samples to a bitstream,
wherein the samples include two or more Y samples corresponding to Y, one or more U samples corresponding to U, and one or more V samples corresponding to V, and
the two or more Y samples are more numerous than the one or more U samples and the one or more V samples.

2. The encoding method according to claim 1,
wherein each of the displacement vectors includes component values including a component value corresponding to a first axis, a component value corresponding to a second axis different from the first axis, and a component value corresponding to a third axis different from the first axis and the second axis, the first axis, the second axis, and the third axis being included in a predetermined three-axis coordinate system.

3. The encoding method according to claim 2,
wherein in the transforming, among the component values, all component values are transformed into the two or more Y samples, all the component values being component values each of which is included in a different one of the displacement vectors and that correspond to the first axis.

4. The encoding method according to claim 2,
wherein in the transforming, among the component values, only one or more of two or more component values are transformed into the one or more U samples or the one or more V samples, the two or more component values being component values each of which is included in a different one of the displacement vectors and that correspond to the second axis or the third axis.

5. The encoding method according to claim 2,
wherein the predetermined YUV format includes no values of the second axis.

6. The encoding method according to claim 2,
wherein the predetermined YUV format includes no values of the third axis.

7. The encoding method according to claim 2,
wherein the predetermined three-axis coordinate system is a local coordinate system corresponding to each of the three-dimensional points.

8. The encoding method according to claim 2,
wherein the three-axis coordinate system is a global coordinate system.

9. The encoding method according to any one of claim 1 to claim 8,
wherein the predetermined YUV format is a YUV 420 format or a YUV 422 format.

10. A decoding method comprising:
decoding samples in a predetermined YUV format from a bitstream;
transforming the samples decoded into displacement vectors representing displacements for correcting three-dimensional points; and
reconstructing a three-dimensional mesh frame including the three-dimensional points corrected using the displacement vectors,
wherein the samples include two or more Y samples corresponding to Y, one or more U samples corresponding to U, and one or more V samples corresponding to V, and
the two or more Y samples are more numerous than the one or more U samples and the one or more V samples.

11. The decoding method according to claim 10,
wherein each of the displacement vectors includes component values including a component value corresponding to a first axis, a component value corresponding to a second axis different from the first axis, and a component value corresponding to a third axis different from the first axis and the second axis, the first axis, the second axis, and the third axis being included in a predetermined three-axis coordinate system.

12. The decoding method according to claim 11,
wherein in the transforming, all the two or more Y samples are transformed into, among the component values, component values each of which is included in a different one of the displacement vectors and that correspond to the first axis.

13. The decoding method according to claim 11,
wherein in the transforming, the one or more U samples or the one or more V samples are transformed into at least one of two or more component values each of which is included in a different one of the displacement vectors and that correspond to the second axis or the third axis.

14. The decoding method according to claim 11,
wherein in the transforming, one or more component values into which none of the samples is transformed are caused to be 0, the one or more component values being included in, among the component values, two or more component values each of which is included in a different one of the displacement vectors and that correspond to the second axis or the third axis.

15. The decoding method according to claim 11,
wherein the predetermined three-axis coordinate system is a local coordinate system corresponding to each of the three-dimensional points.

16. The decoding method according to claim 11,
wherein the three-axis coordinate system is a global coordinate system.

17. The decoding method according to any one of claim 10 to claim 16,
wherein the predetermined YUV format is a YUV 420 format or a YUV 422 format.

18. An encoding device comprising:
a memory; and
a circuit accessible to the memory,
wherein in operation, the circuit:
transforms displacement vectors into samples in a predetermined YUV format, the displacement vectors representing displacements for correcting three-dimensional points included in a three-dimensional mesh frame; and
encodes the samples to a bitstream,
the samples include two or more Y samples corresponding to Y, one or more U samples corresponding to U, and one or more V samples corresponding to V, and
the two or more Y samples are more numerous than the one or more U samples and the one or more V samples.

19. A decoding device comprising:
a memory; and
a circuit accessible to the memory,
wherein in operation, the circuit:
decodes samples in a predetermined YUV format from a bitstream;
transforms the samples decoded into displacement vectors representing displacements for correcting three-dimensional points; and
reconstructs a three-dimensional mesh frame including the three-dimensional points corrected using the displacement vectors,
the samples include two or more Y samples corresponding to Y, one or more U samples corresponding to U, and one or more V samples corresponding to V, and
the two or more Y samples are more numerous than the one or more U samples and the one or more V samples.
